# EUROPÄISCHE PATENTSCHRIFT

(11) **EP 1 205 322 B1**
(45) Veröffentlichungstag und Bekanntmachung des Hinweises auf die Patenterteilung: **28.01.2004**
(21) Anmeldenummer: 01250390.0
(22) Anmeldetag: 07.11.2001
(51) Int. Cl.: B60J 5/04

(54) **Anordnung zur Verbindung einer Grundplatte eines Fensterhebers mit einer Kraftfahrzeugkarosserie**
Assembly for connecting a base plate of a window lifter with a vehicle body
Ensemble pour connecter un support de base d'un lève-vitre avec la carosserie d'un véhicule

(30) Priorität: 08.11.2000 DE 10055879
(43) Veröffentlichungstag der Anmeldung: 15.05.2002
(73) Patentinhaber: Brose Fahrzeugteile GmbH & Co. KG Coburg, 96450 Coburg (DE)
(72) Erfinder: Rietdijk, Dalibor, 35584 Wetzlar (DE); Seliger, Tillmann, 96052 Bamberg (DE); Klippert, Uwe, 36280 Oberaula (DE)
(74) Vertreter: Baumgärtel, Gunnar, Dr.

(56) Entgegenhaltungen:
- EP-A- 0 242 547
- EP-A- 0 704 595
- US-A- 5 430 977
- US-A- 5 581 952

## Beschreibung

Die Erfindung betrifft eine Anordnung zur Verbindung einer Grundplatte eines Fensterhebers mit einer Kraftfahrzeugkarosserie nach dem Oberbegriff des Patentanspruchs 1 und ein dazugehöriges Verfahren nach dem Oberbegriff des Patentanspruchs 32.

Eine derartige Grundplatte eines Fensterhebers dient zur Integration bzw. Aufnahme wesentlicher Bestandteile eines Fensterhebers, wie z.B. mindestens einer Führungsbahn zur Führung eines Mitnehmers, der die zu verstellende Fensterscheibe trägt und der mittels eines geeigneten Fensterhebemechanismus entlang der genannten Führungsbahn bewegt wird. Im einfachsten Fall ist die Grundplatte als Führungsschiene mit genau einer Führungsbahn zur Führung eines Mitnehmers eines Fensterhebers ausgebildet. Alternativ oder zusätzlich können an der Grundplatte ein Antrieb oder eine Hebemechanik des Fensterhebers angeordnet sein. Je nach Funktion kann die Grundplatte dabei z.B. auch gekrümmt ausgebildet sein; sie muß sich jedenfalls nicht in einer Ebene erstrecken. Eine gattungsgemäße Anordung ist aus Dokument US 5 581 952 bekannt.

Die vorliegende Erfindung bezieht sich insbesondere auf die Grundplatten sogenannter Bahnfensterheber, die bei Cabriolet-Fahrzeugen, insbesondere für die hinteren Fenster dieser Fahrzeuge, eingesetzt werden und in die mehrere Führungsbahnen für eine Mehrzahl an Mitnehmern (z.B. drei Führungsbahnen für drei Mitnehmer) integriert sind, um die zu verstellende Fensterscheibe entlang eines komplexen, dreidimensionalen Verstellweges führen zu können. Bei derartigen Fensterhebem ist von besonderer Bedeutung, daß die Grundplatte des Fensterhebers hochpräzise bezüglich der Fahrzeugkarosserie ausgerichtet und an der Fahrzeugkarosserie montiert wird, damit die Fensterscheibe entlang der gewünschten Bahn innerhalb des Fensterrahmens bewegt wird.

Der Erfindung liegt die Aufgabe zugrunde, eine Anordnung zur Befestigung einer Grundplatte eines Fensterhebers an einem tragenden Kraftfahrzeugteil zu schaffen, die in einfacher Weise eine präzise Ausrichtung und Montage der Grundplatte an der Fahrzeugkarosserie ermöglicht.

Diese Aufgabe wird erfindungsgemäß durch die Schaffung einer Anordnung mit den kennzeichnenden Merkmalen des Patentanspruchs 1 gelöst.

Danach umfaßt die Anordnung Befestigungselemente, die an der Grundplatte des Kraftfahrzeug-Fensterhebers festgelegt sind und denen jeweils Durchgangsöffnungen mit Übermaß zugeordnet sind, welche von den Befestigungselementen durchgriffen werden und in denen die Befestigungselemente in einer Ebene parallel zur Querschnittsfläche der Öffnungen bewegbar sind; sowie Aktoren, die den Befestigungsstellen zugeordnet sind und die lösbar mit der Karosserie oder einer bezüglich der Karosserie räumlich fixierten Struktur verbunden sind, wobei die Aktoren eingerichtet sind zum Halten und Betätigen jeweils eines der Befestigungselemente; und weiterhin eine Steuereinrichtung, mittels deren die Aktoren derart steuerbar sind, daß die räumliche Lage der Befestigungselemente sowohl in der genannten Ebene als auch senkrecht dazu einstellbar ist.

Die erfindungsgemäße Lösung ermöglicht es, mittels der Aktoren sowie der zugeordneten Steuereinrichtung sämtliche Befestigungselemente, über die die Grundplatte an verschiedenen Befestigungsstellen mit einem tragenden Kraftfahrzeugteil verbunden wird, in einfacher Weise in ihrer räumlichen Lage zu verändern, wobei gleichzeitig die Grundplatte mitgenommen wird (an der ja die Befestigungselemente fixiert sind). Hierdurch läßt sich die Lage der Grundplatte bezüglich der Fahrzeugkarosserie gezielt und präzise einstellen, insbesondere im Hinblick auf die gewünschte Führungsbahn der Fensterscheibe, und anschließend kann ebenfalls mittels der Aktoren durch Betätigung der Befestigungselemente eine feste Verbindung zwischen Grundplatte und Fahrzeugkarosserie hergestellt werden.

Dadurch, daß die Aktoren eingerichtet sind sowohl zum Betätigen der Befestigungselemente als auch zum Halten der Befestigungselemente, erlauben die Aktoren in einem kontinuierlichen, ununterbrochenen Montageprozeß zunächst die Ausrichtung der (von den Aktoren gehaltenen) Befestigungselemente sowie anschließend deren Betätigung mit dem Ziel der Herstellung einer festen Verbindung zwischen der Fahrzeugkarosserie und der Grundplatte. Es ist nicht erforderlich, den Montagevorgang zum Zwecke des Ausrichtens zu unterbrechen, beispielsweise die Befestigungselemente zunächst mittels einer Schablone auszurichten und festzuziehen und dann nach einem ersten Probelauf der Fensterscheibe und einem erneuten Lösen der Befestigungselemente eine weitere Feinjustage vorzunehmen. Montageverfahren der letztgenannten Art erfordern häufig eine mehrfache Nachjustage, wobei regelmäßig zwei Bedienpersonen erforderlich sind, um die Feinjustage vorzunehmen.

Derart komplizierte Montageprozesse erübrigen sich bei Verwendung der erfindungsgemäßen Anordnung zur Befestigung einer Grundplatte eines Fensterhebers an einer Fahrzeugkarosserie. Denn bei der Montage der Grundplatte unter Verwendung der erfindungsgemäßen Anordnung ergreifen die im Bereich der einzelnen Befestigungsstellen an der Fahrzeugkarosserie oder einer bezüglich der Karosserie ortsfesten Struktur vorgesehenen Aktoren die entsprechenden Befestigungselemente mit geeigneten Werkzeugen der Aktoren und halten hierdurch zugleich die Grundplatte des Fensterhebers, an der die Befestigungselemente fixiert sind. Die Grundplatte wird dann durch Einstellung der räumlichen Lage der Befestigungselemente ausgerichtet, was dadurch ermöglicht wird, daß die Befestigungselemente in der Kraftfahrzeugkarosserie jeweils Befestigungsöffnungen mit Übermaß durchgreifen und außerdem auch noch senkrecht zu der Ebene dieser Öffnungen bewegbar sind. Nach Abschluß der Ausrichtung der Grundplatte mittels der Aktoren können die Aktoren unmittelbar auch dazu verwendet werden, um durch Betätigung der Befestigungselemente eine feste Verbindung zwischen der Grundplatte und der Fahrzeugkarosserie herzustellen. Anschließend werden die Aktoren dann wieder von der Fahrzeugkarosserie abgenommen, an der sie ja nur lösbar befestigt waren.

Von Bedeutung ist also vor allem, daß die erfindungsgemäße Anordnung Aktoren aufweist, die einerseits dazu eingerichtet sind, Befestigungselemente zu halten und in ihrer räumlichen Lage zu verstellen (wobei gleichzeitig eine Einstellung der Lage der Grundplatte erfolgt) und andererseits diese Befestigungselemente zu betätigen, um eine Verbindung zwischen der Grundplatte und der Fahrzeugkarosserie herzustellen. Die Verbindung muß dabei nicht durch unmittelbare Befestigung der Grundplatte an der Fahrzeugkarosserie selbst erfolgen. Vielmehr kann auch eine Befestigung an einer bezüglich der Fahrzeugkarosserie räumlich fixierten tragenden Struktur erfolgen, wodurch ebenfalls eine Verbindung zwischen zwischen Grundplatte und Fahrzeugkarosserie hergestellt wird.

Unter der Betätigung eines Befestigungselementes wird dabei vorliegend jeweils das Betätigen mit dem Zweck der Herstellung einer Verbindung zwischen Grundplatte und Fahrzeugkarosserie bzw. einem Lösen dieser Verbindung verstanden. Dies soll auch eine indirekte Betätigung umfassen, z.B. wenn ein Befestigungselement in Form einer Schraube dadurch betätigt wird, daß eine Mutter auf die Schraube geschraubt wird. Die Einstellung der räumlichen Lage der Befestigungselemente bezieht sich demgegenüber auf eine von deren Betätigung unabhängige, zusätzliche Bewegung der Befestigungselemente, durch die deren Position sowie die Position der hiermit verbundenen Grundplatte des Fensterhebers gezielt eingestellt werden soll.

Die lösbare Verbindung der Aktoren mit der Karosserie bzw. einer bezüglich der Karosserie räumlich fixierten Struktur kann ebenfalls in indirekter Weise erfolgen, z.B. indem die Aktoren auf einem gemeinsamen Träger angeordnet sind, der wiederum lösbar mit der Karosserie bzw. der genannten Struktur verbunden wird.

Die erfindungsgemäße Lösung eignet sich vor allem zur Verwendung bei sogenannten Bahnfensterhebern, deren Grundplatte eine Führung für mehrere Mitnehmer des Fensterhebers aufweist, wobei diese Führungen einstückig in der Grundplatte geformt sein können. Sie ist jedoch auch anwendbar zur Befestigung einer Grundplatte in Form einer einfachen Führungsschiene mit nur einer Führungsbahn an einem hierfür vorgesehenen Fahrzeugteil.

Die Befestigungselemente sind dabei in der durch die Durchgangsöffnungen der Karosserie definierten Ebene vorzugsweise entlang zweier Achsen, und zwar insbesondere zweier senkrecht aufeinander stehende Achsen, nämlich der Fahrzeuglängsachse (x-Achse) sowie der vertikalen Fahrzeugachse (z-Achse) bewegbar.

Die Steuerung der Aktoren mittels der Steuereinrichtung erfolgt anhand der Lage der zu verstellenden Fensterscheibe bezüglich der zugeordneten Bestandteile der Fahrzeugkarosserie, insbesondere des Fensterrahmens sowie einer Scheibendichtung. Mit anderen Worten werden die Aktoren mittels der Steuereinrichtung derart gesteuert, daß die Grundplatte des Fensterhebers in eine Position gebracht wird, in der die Fensterscheibe eine definierte Lage innerhalb des Fensterrahmens annimmt. Hierzu ist es selbstverständlich erforderlich, daß zum Zeitpunkt der Ausrichtung der Grundplatte bezüglich der Fahrzeugkarosserie bereits wesentliche Teile des Fensterhebers, insbesondere der die Fensterscheibe tragende Mitnehmer sowie die Fensterscheibe selbst montiert sind.

Zur Ausrichtung der Grundplatte unter Zugrundelegung der Lage der Fensterscheibe kann ein Sensor verwendet werden, der die Lage der Fensterscheibe bezüglich des Fensterrahmens erfaßt, z.B. ein Sensor in Form eines Endschalters.

Die Aktoren sind mit mindestens einem Antrieb gekoppelt, der einerseits die Betätigung der Befestigungselemente durch die Aktoren sowie andererseits die Einstellung der räumlichen Lage der Befestigungselemente durch die Aktoren bewirkt, und zwar in Abhängigkeit von Steuersignalen der Steuereinrichtung, die dem Antrieb zugeführt werden. Der Antrieb ist vorzugsweise als elektrischer Antrieb ausgebildet und weist eine Verstellspindel auf, mittels der die Lage der Betätigungsmittel der Aktoren verstellbar ist, um die räumliche Lage der von den Betätigungsmitteln gehaltenen Befestigungselemente einstellen zu können.

Die Aktoren können dabei einerseits von der Steuereinrichtung automatisch in Abhängigkeit von der Lage der zu verstellenden Fensterscheibe gesteuert werden. Alternativ kann vorgesehen sein, daß von der Steuereinrichtung in Abhängigkeit von der räumlichen Lage der Fensterscheibe ein Vorschlag für eine Einstellung der Grundplatte des Fensterhebers erzeugt wird und daß dieser Vorschlag auf einer Anzeigeeinrichtung der Steuereinrichtung angezeigt wird. In diesem Fall erfolgt dann eine manuelle Betätigung der Steuereinrichtung auf der Grundlage dieses Vorschlages.

Die Befestigungselemente werden vorzugsweise durch Schrauben oder vergleichbare, durch eine Drehbewegung betätigbare Befestigungselemente gebildet. Die Aktoren sind dann in entsprechender Weise zur Erzeugung einer Drehbewegung der Befestigungselemente ausgebildet.

Zur Fixierung der Befestigungselemente bezüglich der Grundplatte des Fensterhebers kann dann in einfacher Weise ein Gewinde in der Grundplatte vorgesehen sein, in das die Schraube eingeschraubt wird, wobei die Einschraubtiefe der Schraube in dem Gewinde variabel ist, um die Einstellung von deren Lage senkrecht zur ihrer Erstreckungsrichtung zu ermöglichen. Eine Änderung der Einschraubtiefe der Schraube in der Grundplatte bedeutet dabei eine Änderung der Distanz zwischen der Grundplatte und dem die Grundplatte aufnehmenden Abschnitt der Fahrzeugkarosserie, entsprechend einer Veränderung der räumlichen Lage der Grundplatte bezüglich der Fahrzeugkarosserie.

Zur Herstellung der Verbindung zwischen Fahrzeugkarosserie und Grundplatte sind den Schrauben, die jeweils Öffnungen in der Fahrzeugkarosserie durchgreifen, Kontermuttern zugeordnet.

Mittels der Aktoren sind dann sowohl die Schrauben als auch die zugeordneten Kontermuttern betätigbar, wobei bei einer zeitgleichen Betätigung sowohl einer Schraube als auch der zugeordneten Mutter eine Verstellung der räumlichen Lage der Schraube in ihre Erstreckungsrichtung erfolgt, ohne daß Schraube und Kontermutter eine Relativbewegung zueinander ausführen. Es erfolgt dann also kein Betätigen der Schraube in dem Sinne, daß eine Verbindung hergestellt oder gelöst werden soll, sondern es geht vielmehr ausschließlich um die Einstellung der räumlichen Lage der Schraube als Befestigungselemente (und somit auch der räumlichen Lage der Grundplatte).

Zur Betätigung einer Schraube als auch einer Kontermutter weisen die Aktoren zwei konzentrische Wellen auf, von denen die eine mit einem Werkzeug zur Betätigung der Schraube und die andere mit einem Werkzeug zur Betätigung der Kontermutter versehen ist, wobei die äußere Welle als Hohlwelle ausgebildet ist.

Sollen die Befestigungselemente in Form von Schraube und Mutter demgegenüber mit dem Ziel betätigt werden, eine Verbindung herzustellen oder diese zu lösen, so wird die Schraube mit dem zugeordneten Werkzeug des Aktors gehalten, während gleichzeitig die Kontermutter weiter auf die Schraube geschraubt wird.

Die Grundplatte und die Karosserie sind vorzugsweise an drei separaten Befestigungsstellen miteinander verbunden.

Zur Einstellung der Lage der Befestigungselemente in der Ebene der Durchgangsöffnungen der Fahrzeugkarosserien sind die zur Betätigung und zum Halten der Befestigungselemente vorgesehen Betätigungsmitteln mindestens eines Aktors in der Ebene der Durchgangsöffnungen bewegbar. Hierzu können die Betätigungsmittel einerseits in der genannten Ebene verschiebbar gelagert sein oder es ist eine gelenkige Lagerung mittels eines Kugelgelenkes vorgesehen.

Gemäß einer Variante der Erfindung sind die Betätigungsmittel der Aktoren jeweils unabhängig voneinander steuerbar. Nach einer anderen Variante der Erfindung sind die Betätigungsmittel mindestens zweier Aktoren mechanisch miteinander gekoppelt, und zwar insbesondere im Hinblick auf eine Einstellung der Betätigungsmittel in der durch die Durchgangsöffnungen definierten Ebene. D.h., lediglich die Betätigungsmittel eines der beiden Aktoren sind mittels der Steuereinrichtung in der genannten Ebene verstellbar, während die Betätigungsmittel des anderen Aktors dieser Verstellung folgen (mechanische Zwangskopplung). Alternativ kann auch vorgesehen sein, daß die Betätigungsmittel der beiden Aktoren zwar nicht mechanisch gekoppelt sind, daß aber lediglich die Betätigungsmittel eines der Aktoren für eine Bewegung in der Ebene der Durchgangsöffnungen angesteuert werden, während die Betätigungsmittel des anderen Aktors aufgrund einer geeigneten Lagerung (Loslager) eine entsprechende passive Bewegung durchführen.

Um die Lage der einzelnen Aktoren zueinander festzulegen, können diese auf einer gemeinsamen Trägerplatte angeordnet sein. Dies hat gleichzeitig den Vorteil, daß bei der Montage der Grundplatte an der Fahrzeugkarosserie nicht mehr die einzelnen Aktoren sondern lediglich die Trägerplatte an der Fahrzeugkarosserie befestigt werden muß.

Hierbei kann zum einen die Trägerplatte ortsfest mit der Karosserie verbunden sein. Zum anderen kann die Trägerplatte aber auch in der Ebene der Durchgangsöffnungen beweglich an der Karosserie gelagert und mittels der Steuereinrichtung in dieser Ebene verschiebbar sein. In diesem Fall erfolgt die Einstellung der Lage der Befestigungselemente und damit auch der Grundplatte des Fensterhebers in der Ebene der Durchgangsöffnungen nicht unmittelbar durch die Aktoren selbst sondern vielmehr durch eine entsprechende Verschiebung der Trägerplatte in dieser Ebene, bei der die an der Trägerplatte gelagerten Aktoren mitgenommen werden, so daß sich die entsprechende Bewegung auf die Befestigungselemente und somit auf die Grundplatte des Fensterhebers überträgt. Die Aktoren selbst übernehmen dann unmittelbar nur noch die Einstellung der Lage der Befestigungselemente senkrecht zu der Ebene der Durchgangsöffnungen.

Für die Justierung der Grundplatte des Fensterhebers ist ein gewisses Spiel an den Befestigungsstellen erforderlich, um die für die Justierung aufzubringenden Verstellkräfte gering zu halten und damit auch Beschädigungen im Bereich der Befestigungsstellen vorzubeugen. Ein zu großes Spiel kann allerdings bei der abschließenden Befestigung der Grundplatte des Fensterhebers an der Karosserie zu einer Veränderung der zuvor eingestellten Position führen. Um dies zu vermeiden, kann vorgesehen sein, daß die Grundplatte des Fensterhebers in Richtung auf die Karosserie elastisch vorgespannt ist.

Zur lösbaren Befestigung der Aktoren an der Fahrzeugkarosserie können in einfacher Weise Schnappelemente verwendet werden.

Ein Verfahren zur Befestigung einer Grundplatte eines Fensterhebers an einer Fahrzeugkarosserie, das insbesondere mittels der erfindungsgemäßen Anordnung durchgeführt werden kann, ist durch die kennzeichnenden Merkmale des Anspruchs 32 charakterisiert. Ein gattungsgemäßes Verfahren ist aus Dokument US 5 581 952 bekannt.

Weitere Merkmale und Vorteile der Erfindung werden bei der nachfolgenden Beschreibung eines Ausführungsbeispiels anhand der Figuren deutlich werden.

Es zeigen:
- Figur 1 -: eine schematische, perspektivische Ansicht einer seitlichen Fahrzeugkarosserie mit einem verstellbaren Rückfenster und einer Grundplatte für einen diesem Fenster zugeordneten Fensterheber sowie einer Einrichtung zur Befestigung dieser Grundplatte an der Fahrzeugkarosserie;
- Figuren 2a bis 2c -: drei Montageschritte bei der Befestigung einer Grundplatte für einen Fensterheber an einer Fahrzeugkarosserie unter Verwendung mehrerer Aktoren und einer Steuereinrichtung zur Steuerung der Aktoren;
- Figur 3 -: eine schematische Darstellung dreier Aktoren an einer Fahrzeugkarosserie, wobei zwei der Aktoren mechanisch miteinander gekoppelt sind;
- Figur 4a -: eine schematische Darstellung dreier Aktoren an einer Fahrzeugkarosserie, wobei die Aktoren auf einer gemeinsamen Trägerplatte angeordnet sind;
- Figur 4b -: eine Darstellung der Trägerplatte aus Figur 4a;
- Figur 5a -: eine Abwandlung von Figur 2c, wobei zusätzlich eine Schraubenfeder vorgesehen ist, mittels der die Grundplatte des Fensterhebers gegen die Fahrzeugkarosserie vorgespannt ist;
- Figur 5b -: eine Abwandlung von Figur 2c wobei zusätzlich Tellerfedern vorgesehen sind, mittels der die Grundplatte des Fensterhebers gegen die Fahrzeugkarosserie vorgespannt ist;
- Figur 6a -: einen Endschalter, mit dem die Position einer Fensterscheibe bezüglich des Fensterrahmens ermittelbar ist;
- Figur 6b -: einen Schnitt durch den Endschalter gemäß Figur 6a;
- Figur 7 -: eine schematische Darstellung eines Aktors, der zur Befestigung einer Grundplatte eines Fensterhebers an der Fahrzeugkarosserie verwendbar ist;
- Figur 8 -: ein erstes konkretes Ausführungsbeispiel eines Aktors gemäß Figur 7;
- Figur 9 -: ein zweites konkretes Ausführungsbeispiel eines Aktors gemäß Figur 7;
- Figur 10a -: ein drittes konkretes Ausführungsbeispiel eines Aktors gemäß Figur 7;
- Figuren 10b bis 10e -: eine Abwandlung des Ausführungsbeispieles aus Fig. 10a;
- Figur 11 -: ein viertes konkretes Ausführungsbeispiel eines Aktors gemäß Figur 7;
- Figur 12a -: eine Draufsicht auf ein Detail der Aktoren aus den Figuren 10 und 11;
- Figur 12b -: ein Längsschnitt durch das in Figur 12a dargestellte Detail;
- Figuren 12c und 12d -: zwei Querschnitte durch das in den Figuren 12a und 12b dargestellte Detail;
- Figur 13a -: ein erstes Ausführungsbeispiel eines Schnappelementes zur Befestigung eines Aktors an der Fahrzeugkarosserie vor dem Einschnappen;
- Figur 13b -: das Schnappelement aus Figur 13a nach dem Einschnappen;
- Figur 14a -: ein zweites Ausführungsbeispiel eines Schnappelementes zur Befestigung eines Aktors an der Fahrzeugkarosserie;
- Figur 14b -: das Schnappelement aus Figur 14a nach dem Einschnappen.

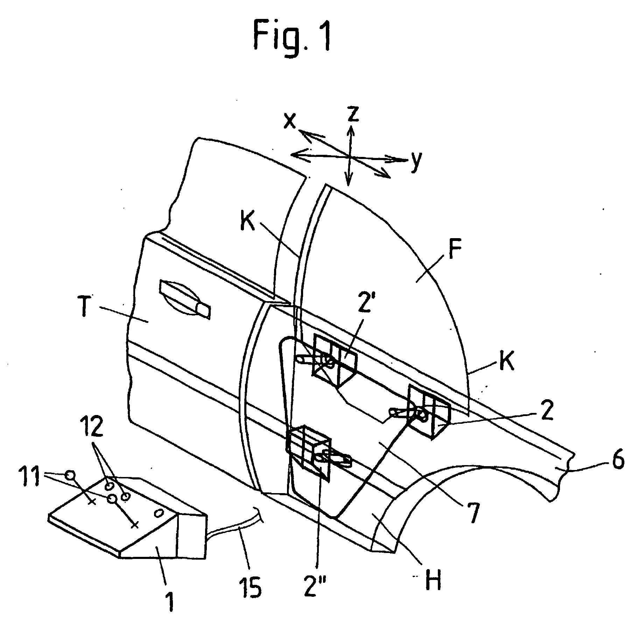

In Figur 1 ist schematisch und perspektivisch ein Aus-schnitt der seitlichen Karosserie eines Kraftfahrzeugs dargestellt, mit einem als Tür T ausgebildeten vorderen Karosserieabschnitt und einem türlosen, eine verstellbare Fensterscheibe F aufweisenden hinteren Karosserieabschnitt H.

Zur Verstellung der Fensterscheibe F des hinteren Karosserieabschnittes H ist ein in Figur 1 nicht dargestellter Fensterheber vorgesehen, der auf einer am hinteren Karosserieabschnitt 6 befestigten Grundplatte 7 angeordnet ist. Versenkbare Fensterscheiben der in Figur 1 dargestellten Art, die in einem hinteren Karosserieabschnitt eines zweitürigen Fahrzeugs, insbesondere eines Cabriolet-Fahrzeugs, angeordnet sind, werden beim Absenken und Anheben mittels eines Fensterhebers in der Regel entlang komplexer dreidimensionaler Bahnen geführt. Um diese Führung zu ermöglichen kann die Grundplatte 7 des Fensterhebers mit mehreren Führungsbahn für mehrere Mitnehmer des Fensterhebers versehen sein, die die Fensterscheibe tragen und durch den Fensterheber verstellt werden, so daß die Verstellbewegung des Fensterhebers über die Mitnehmer auf die Fensterscheibe F übertragen wird. Darüber hinaus können zusätzliche Führungen für die seitlichen Kanten K der Fensterscheibe F an der Grundplatte 7 angeformt sein.

Eine derartige Grundplatte 7 eines Fensterhebers, die der Führung der Fensterscheibe dient, muß in der Fahrzeugkarosserie präzise ausgerichtet werden, damit die Fensterscheibe exakt entlang der gewünschten Bahn geführt wird. Dies gilt insbesondere im Hinblick auf die Bewegung der Fensterscheibe innerhalb des zugeordneten Fensterrahmens. So muß etwa gewährleistet sein, daß beim vollständigen Anheben der Fensterscheibe in ihre Endposition diese mit ihrer Oberkante eine gewünschte Endlage innerhalb der Scheibendichtung einnimmt.

Dies erfordert eine präzise Ausrichtung der Grundplatte 7 bezüglich der Fahrzeugkarosserie 6 bei der Montage und zwar entlang aller Fahrzeugachsen x (Fahrzeuglängsachse), y (Fahrzeugquerachse) sowie z (vertikale Fahrzeugachse).

Für eine präzise Justierung der Grundplatte 7 des Fensterhebers in der Fahrzeugkarosserie 6 werden vorliegend drei Aktoren 2, 2', 2" verwendet, die zu Zwecken der Montage an der Fahrzeugkarosserie 6 lösbar befestigt sind und die mittels einer Steuereinrichtung 1 gesteuert werden. Die Steuereinrichtung 1 umfasst Betätigungselemente 11, Anzeigeelemente 12 sowie einen elektrischen Kabelstrang 15, der zu den Antrieben der einzelnen Aktoren 2, 2', 2" führt.

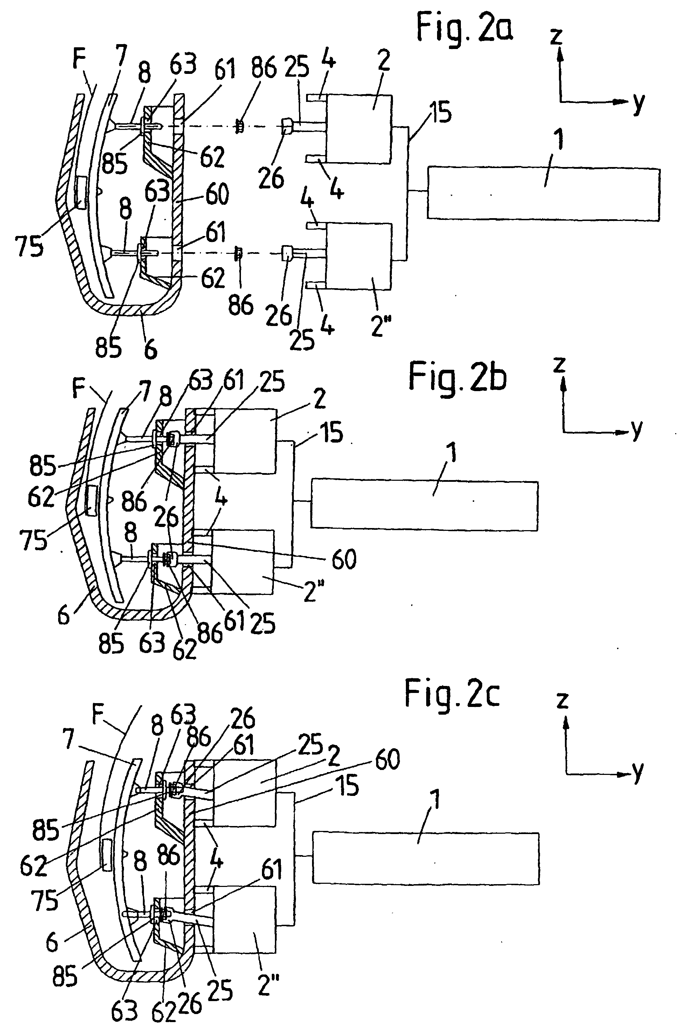

Weitere Einzelheiten hierzu werden nachfolgend anhand der Figuren 2a bis 2c beschrieben werden.

Figur 2a zeigt eine Fahrzeugkarosserie 6 mit einem inneren (zum Fahrzeuginnenraum weisenden) ebenen Karosserieab-schnitt 60, der drei Halteteile 62 in Form von Halteblechen aufweist, von denen in der Schnittdarstellung gemäß Fi-gur 2a zwei erkennbar sind. Die Halteteile 62 weisen jeweils eine Durchgangsöffnung 63 auf, die von einem Befestigungselement 8 in Form einer Stellschraube durchgriffen werden, wobei sich die jeweilige Stellschraube 8 mit einem wulstförmigen Abschnitt 85 am Rand der zugeordneten Öffnung 63 abstützt. Die Öffnungen 63 weisen bezüglich des Durchmessers des Schaftes der jeweiligen Stellschrauben 8 ein Übermaß auf, so dass sich die Stellschrauben 8 in den Öffnungen 63 in einer sich senkrecht zur Fahrzeugquerachse y erstreckenden Ebene (also in der durch die Durchgangsöffnungen 63 definierte Ebene) bewegen können.

Die Stellschrauben 8 sind jeweils an der Grundplatte 7 des Fensterhebers festgelegt, und zwar dadurch, dass die Stellschrauben 8 mit ihrem Gewinde in ein entsprechendes Gegengewinde der Grundplatte 7 eingeschraubt sind. Dies bedeutet, dass die Grundplatte 7 bei einer Bewegung der Stellschrauben 8 jeweils mitgenommen wird.

Die Grundplatte 7 dient, wie bereits anhand Figur 1 erläutert, zur Aufnahme eines Fensterhebers, wobei wesentliche Bestandteile dieses Fensterhebers, wie z. B. Führungsbahnen, einstückig an der Grundplatte 7 angeformt sein können. Von den Bestandteilen eines Fensterhebers ist in Figur 2a ein Mitnehmer 75 dargestellt, der eine Fensterscheibe F trägt.

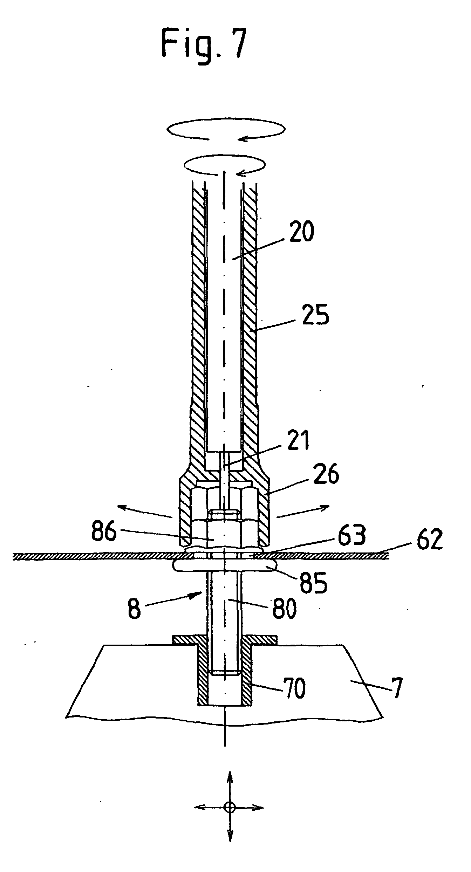

Mit den Öffnungen 63 in den Halteteilen 62 fluchtend sind Öffnungen 61 im inneren Abschnitt 60 der Fahrzeugkarosserie 6 vorgesehen. Im Bereich dieser Öffnungen 61 werden an dem inneren Abschnitt 60 der Fahrzeugkarosserie gemäß Figur 2a jeweils Aktoren 2, 2" mittels geeigneter Befestigungsmittel 4 lösbar befestigt. (Alternativ wäre eine lösbare Befestigung der Aktoren 2, 2' an einer bezüglich der Karosserie räumlich fixierten Struktur, die an dem entsprechenden Montageplatz zur Verfügung gestellt wird, möglich.) Die Aktoren 2, 2" weisen jeweils Betätigungsmittel 25 auf, die im montierten Zustand der Aktoren 2, 2" die Öffnungen 61 durchgreifen und die zur Betätigung der Stellschrauben 8 sowie zugeordneter Kontermuttern 86 ausgebildet und geeignet sind. In der Darstellung gemäß Figur 2a ist dabei an dem Betätigungsmittel 25 jeweils nur ein Werkzeug 26 erkennbar, das zur Betätigung einer Kontermutter 86 vorgesehen ist. Weitere Einzelheiten zu den Betätigungsmitteln werden weiter unten anhand der Figuren 7 bis 11 beschrieben werden.

Die Betätigungsmittel 25 der Aktoren werden jeweils durch einen Antrieb des entsprechenden Aktors 2, 2" angetrieben. Die Betätigungsmittel 25 können einerseits gedreht werden, um die sich entlang der Fahrzeugquerachse y erstreckenden Stellschrauben 8 sowie die zugeordneten Kontermuttern 86 betätigen zu können. Desweiteren können die Betätigungsmittel 25 bzw. zumindest die an den Enden der Betätigungsmittel vorgesehenen Werkzeuge (z. B. das zur Betätigung einer Kontermutter 86 vorgesehene Werkzeug 26) in der Ebene senkrecht zur Fahrzeugquerachse y (xz-Ebene) bewegt werden. Zur Steuerung der Antriebsmotoren der Aktoren 2, 2" dient die anhand Figur 1 bereits erläuterte Steuereinrichtung 1, die über einen elektrischen Kabelstrang 15 mit den Aktoren 2, 2" elektrisch verbunden ist.

Figur 2b zeigt die Anordnung aus Figur 2a, nachdem die Aktoren 2, 2" auf den inneren Abschnitt 60 der Fahrzeugkarosserie 6 aufgesetzt und mittels geeigneter Schnappelemente 4 lösbar hiermit verbunden worden sind. Die Betätigungsmittel 25 der Aktoren 2, 2" ergreifen dann mit ihren Werkzeugen (von denen in Figur 2a jeweils lediglich eines der Werkzeuge 26 erkennbar ist) die Stellschrauben 8 sowie die Kontermuttern 86 und halten diese. Es werden dann zunächst die Kontermuttern 86 auf die zugehörigen Stellschrauben 8 aufgeschraubt, und zwar jeweils soweit, dass die Halteteile 62 mit einem definierten, geringen Spiel zwischen den Wülsten 85 der Stellschrauben 8 sowie den Kontermuttern 86 aufgenommen sind. In diesem Zustand erfolgt die Justierung der Position der Grundplatte 7 des Fensterhebers innerhalb der Fahrzeugkarosserie 6.

Die Einstellung der Lage der Grundplatte 7 des Fensterhebers in der Fahrzeugkarosserie erfolgt bezüglich sämtlicher Fahrzeugachsen x, y, z. Die Einstellung der Lage der Grundplatte 7 in der Ebene senkrecht zur Fahrzeugquerachse (xz-Ebene) erfolgt dabei durch ein Verschwenken der Betätigungsmittel 25 der Aktoren 2, 2", welches eine Bewegung der an den Enden der Betätigungsmittel 25 vorgesehenen Werkzeuge in der genannten Ebene zu Folge hat. Diese Bewegung wird dadurch ermöglicht, dass die Betätigungsmittel 25 in dem inneren Abschnitt 60 der Fahrzeugkarosserie 6 jeweils Durchgangsöffnungen 61 mit Übermaß durchgreifen. Die Bewegung der Werkzeuge der Aktoren 2, 2" hat eine entsprechende Bewegung der von diesen Werkzeugen gehaltenen Stellschrauben 8 und Kontermuttern 86 zur Folge, wobei wiederum die Grundplatte 7 mitgenommen wird. Hierdurch kann die Position der Grundplatte in der xz-Ebene senkrecht zur Fahrzeugquerachse y eingestellt werden, wobei die einzelnen Aktoren 2, 2" unabhängig voneinander mittels der Steuereinrichtung 1 ansteuerbar sind.

Die Betätigungsmittel sind durch die Antriebe der jeweiligen Aktoren 2, 2" vorzugsweise derart bewegbar, dass sich deren Werkzeuge (z. B. das zum Ergreifen und Halten der Kontermuttern 86 vorgesehene Werkzeug 26) entlang zweier zueinander senkrechter Achsen, nämlich entlang der Fahrzeuglängsachse x und der vertikalen Fahrzeugachse z bewegen können.

Eine Verstellung der Lage der Grundplatten 7 des Fensterhebers entlang der Fahrzeugquerachse y erfolgt dadurch, dass mittels der Aktoren 2, 2" die Stellschrauben 8 und die jeweils zugehörigen Kontermuttern 86 gleichzeitig in eine Drehbewegung versetzt werden, wobei die Einschraubtiefe der Stellschrauben 8 in der Grundplatte 7 verändert wird und wobei außerdem der Abstand zwischen der Wulst 85 der einzelnen Stellschrauben 8 sowie der jeweils zugeordneten Kontermutter 86 konstant bleibt. Dies bedeutet, dass keine Relativbewegung der Wülste 85 bzw. Kontermuttern 86 bezüglich der Halteteile 62 erfolgt. Letztere bleiben vielmehr mit einem definierten Spiel zwischen jeweils einer Wulst 85 und einer Kontermutter 86 aufgenommen. Dies bedeutet, dass sich der Abstand zwischen der Grundplatte 7 und dem inneren Abschnitt 60 der Fahrzeugkarosserie 6 entlang der Fahrzeugquerachse y ändert.

Wenn schließlich die gewünschte Position der Grundplatte 7 innerhalb der Fahrzeugkarosserie 6 eingestellt ist, wobei als Kriterium für die korrekten Einstellung der Lage der Grundplatte 7 vorzugsweise die Einstellung einer definierten Lage der Fensterscheibe F innerhalb des Fensterrahmens dient, so wird abschließend eine spielfreie Verbindung zwischen der Grundplatte 7 und der Fahrzeugkarosserie 6 hergestellt. Hierzu werden mittels der Aktoren 2, 2" die Stellschrauben 8 drehfest gehalten, während gleichzeitig die zugehörigen Kontermuttern 86 festgezogen werden.

Nach Abschluss dieses letzten Montageschrittes werden die Aktoren 2, 2" wieder von der Karosserie gelöst und können erneut verwendet werden.

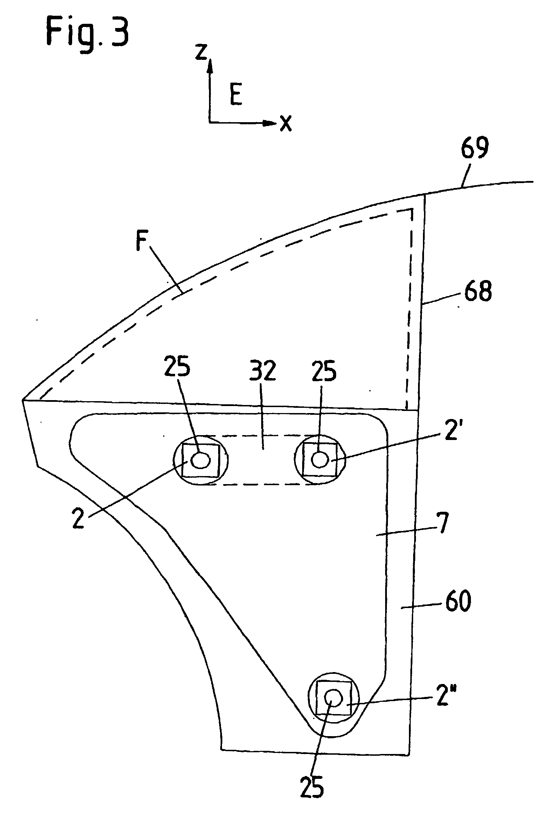

Figur 3 zeigt schematisch eine Abwandlung des Ausführungsbeispiels aus den Figuren 1 und 2, wobei hier in der xz-Ebene E senkrecht zur Fahrzeugquerachse ein innerer Teil 60 der Fahrzeugkarosserie, eine Grundplatte 7 des Fensterhebers, eine Fensterscheibe F sowie ein seitliches Rahmenteil 68 und der Dachrahmen 69 der Fensterscheibe F dargestellt sind. Ferner sind schematisch drei Aktoren 2, 2', 2" angedeutet, die den gleichen Aufbau haben wie die in den Figuren 2a bis 2c dargestellten Aktoren.

Ein Unterschied liegt hier darin, dass zwei Aktoren 2, 2' mittels eines Koppelelementes 32 mechanisch gekoppelt sind, und zwar derart, dass die Bewegungen der Betätigungsmittel 25 des einen Aktors 2 in der xz-Ebene E auf die Betätigungsmittel 25 des anderen Aktors 2' übertragen werden. Das heißt, die Betätigungsmittel 25 des letztgenannten Aktors 2' folgen insofern lediglich passiv den Bewegungen der Betätigungsmittel 25 des erstgenannten Aktors 2 in der xz-Ebene E.

Hinsichtlich einer Bewegung senkrecht zu dieser Ebene E, also entlang der Fahrzeugquerachse y werden demgegenüber die beiden Aktoren 2, 2' separat gesteuert.

Das Ausführungsbeispiel gemäß Figur 3 hat den Vorteil, dass zwei Aktoren 2, 2' hinsichtlich der Bewegung ihrer Betätigungsmittel in der xz-Ebene E mit einem einzelnen Antrieb angetrieben werden können.

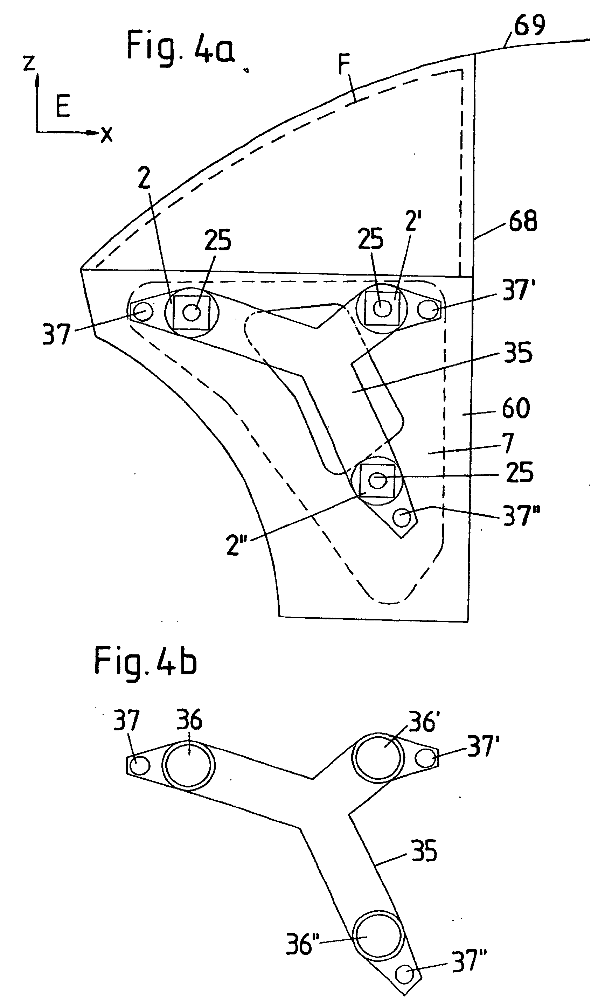

Die Figuren 4a und 4b zeigen in einer der Figur 3 vergleichbaren schematischen Darstellung ein Ausführungsbeispiel, bei dem drei Aktoren 2, 2', 2" auf einer gemeinsamen Trägerplatte 35 angeordnet sind. Diese weist drei Aufnahmen 36, 36', 36" für die einzelnen Aktoren sowie drei Befestigungsstellen 37, 37', 37" zur Befestigung an einem Abschnitt 60 der Fahrzeugkarosserie auf. Die Aktoren 2, 2', 2" werden in den Aufnahmen 36, 36', 36" zunächst mit etwas Spiel aufgenommen. Sodann wird die Trägerplatte 35 über die Befestigungsstellen 37, 37', 37" lösbar mit dem Abschnitt 60 der Fahrzeugkarosserie verbunden. (Alternativ wäre eine lösbare Befestigung der Trägerplatte 35 an einer bezüglich der Karosserie räumlich fixierten Struktur, die an dem entsprechenden Montageplatz zur Verfügung gestellt wird, möglich.) Anschließend werden die Aktoren 2, 2', 2" bezüglich der Befestigungselemente ausgerichtet, die von den Betätigungsmitteln 25 der Aktoren ergriffen und betätigt werden sollen. Sodann werden die Aktoren 2, 2', 2" starr bezüglich der Trägerplatte 35 fixiert.

Nach einer Variante ist hierbei vorgesehen, dass die einzelnen Aktoren 2, 2', 2" jeweils unabhängig mittels einer Steuereinrichtung angesteuert werden, entsprechend dem Ausführungsbeispiel aus den Figuren 2a bis 2c. Bei dieser Variante dient die Trägerplatte 35 vor allem dazu, die Montage der Aktoren an der Fahrzeugkarosserie zu vereinfachen. Denn es muss nicht jeder Aktor einzeln mit der Fahrzeugkarosserie verbunden werden.

Nach einer anderen Variante ist die Trägerplatte 35 in der xz-Ebene E (senkrecht zur Fahrzeugquerachse) beweglich an dem Abschnitt 60 der Fahrzeugkarosserie angeordnet. In diesem Fall kann die Trägerplatte 35 an allen Befestigungsstellen 37, 37', 37" jeweils in der xz-Ebene E in zwei Achsen bewegt werden. Bei einer solchen Bewegung, die von einer zugeordneten Steuereinrichtung über geeignete Antriebsmotoren veranlasst wird, werden die Aktoren 2, 2', 2" und die zugeordneten Betätigungsmittel 25 jeweils mitgenommen, so dass sich die Bewegung über die von den Betätigungsmitteln der Aktoren gehaltenen Befestigungselemente auf die einzustellende Grundplatte 7 des Fensterhebers überträgt.

Die Aktoren 2, 2', 2" selbst übernehmen dann unmittelbar nur noch die Funktion die jeweils zugeordneten Betätigungsmittel 25 in Richtung der Fahrzeugquerachse zu verstellen sowie nach Einstellung der Position der Grundplatte 7 die Befestigungselemente zur Herstellung einer dauerhaften Verbindung zwischen der Grundplatte 7 und einem Abschnitt 60 der Fahrzeugkarosserie anzuziehen.

Wie bereits dargelegt wurde, ist für die räumliche Justierung der Grundplatte des Fensterhebers innerhalb der Fahrzeugkarosserie ein gewisses Spiel an den einzelnen Befestigungsstellen (Durchgangsöffnungen 63 und zugeordnete Stellschrauben 8 bzw. Kontermuttern 86 in den Figuren 2a bis 2c) notwendig, um die Stellkräfte gering zu halten. Ein zu großes Spiel kann andererseits beim abschließenden Fixieren der Grundplatte der bezüglich der Fahrzeugkarosserie zu einer Veränderung der Endposition führen. Daher ist für die Verstellung der Grundplatte ein Bezug in allen Fahrzeugachsen notwendig, um keine ungewollten Bewegungen zu erhalten. Der Bezug in der xz-Ebene senkrecht zur Fahrzeugquerachse y wird mittels des jeweiligen Werkzeugs 26 der Betätigungsmittel 25 der Aktoren über die Kontermutter 86 hergestellt. In Richtung der Fahrzeugquerachse y sind dagegen zusätzliche Mittel erforderlich, um den Abstand zwischen den Stellschrauben 8 bzw. deren jeweiliger Wulst 85 und dem entsprechenden Halteteil 62 konstant zu halten.

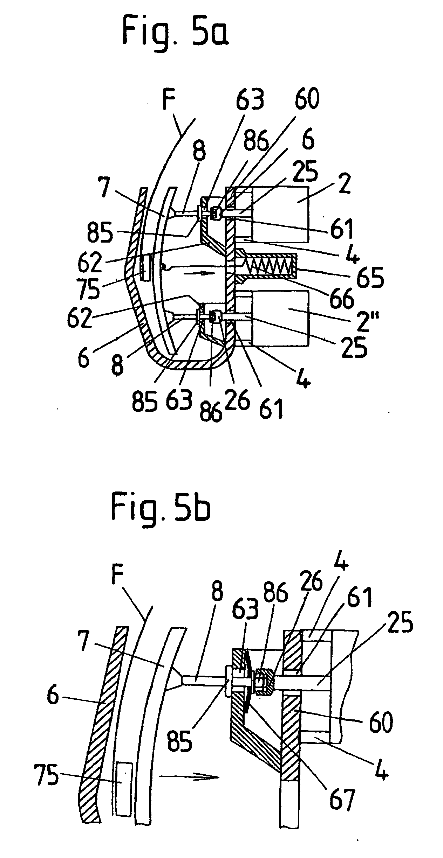

Um den Bezugskontakt entlang der Fahrzeugquerachse y herzustellen, wird gemäß den Figuren 5a und 5b die Grundplatte 7 durch eine federelastische Kraft in Richtung des Abschnittes 60 der Fahrzeugkarosserie sowie der dort vorgesehenen Halteteile 62 gedrückt. Die federelastische Kraft ist so bemessen, dass der Kontakt zwischen der Wulst 85 der jeweiligen Stellschraube 8 und dem zugeordneten Halteteil 62 stets aufrecht erhalten wird, gleichzeitig aber das Ausrichten der Grundplatte 7, dass eine Bewegung der Stellschrauben 8 innerhalb der Öffnungen 63 der Halteteile 62 erfordert, nicht behindert wird.

Gemäß der in Figur 5a dargestellten Ausführungsform ist eine zentrale Krafteinleitung vorgesehen, über eine in einem Gehäuse 65 angeordnete Schraubenfeder 66, wobei das Gehäuse 65 an dem Abschnitt 60 der Fahrzeugkarosserie festgelegt ist und die als Zugfeder ausgebildete Schraubenfeder 66 mit einem Ende an der Grundplatte 7 des Fensterhebers angreift.

Nach einer anderen in Figur 5b darstellten Ausführungsform sind im Bereich der Durchgangsöffnungen 63 in den Halteteilen 62 jeweils Tellerfedern 67 vorgesehen, mittels der die Wülste 85 der Stellschrauben 8 gegen den Rand der jeweils zugeordneten Durchgangsöffnung 63 gedrückt werden.

Alternativ zu diesen beiden mechanischen Varianten werden in einer regelungstechnischen Variante die Kontermuttern 86 mittels der Aktoren 2, 2', 2" zunächst jeweils mit einem geringen Drehmoment festgeschraubt. Nach diesem Kontakt wird über die Steuereinrichtung die Verbindung auf ein bestimmtes Spaltmaß automatisch gelöst. Erreicht wird dies durch eine definierte Anzahl von Umdrehungen. Vor der abschließenden Fixierung aller Kontermuttern 85, wird jede Stellschraube 8 über die Steuereinrichtung um ein bestimmtes Maß verstellt, dass sich bei den ersten Einstellvorgängen iterativ ergibt. Dieses Maß wird entweder vom Bediener vorgegeben oder von der Steuereinrichtung erlemt, sowie gegebenenfalls korrigiert. Hierdurch wird der Spalt, welcher zuvor für die Einstellung der Lage der Grundplatte des Fensterhebers benötigt wurde, ausgeglichen.

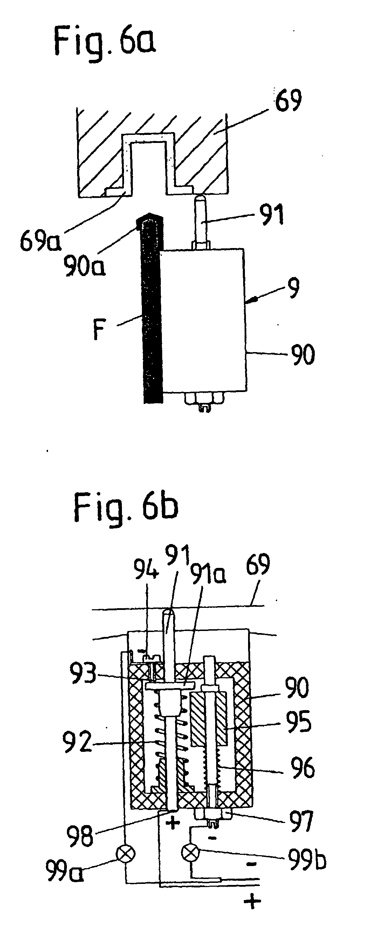

In den Figuren 6a und 6b ist ein Endschalter 9 dargestellt, der an relevanten Stellen mittels einer Einhängung 90a an der Oberkante der Fensterscheibe F eingehängt wird. Mit einem solchen Endschalter 9 kann die Lage der Fensterscheibe F bezüglich definierter Abschnitte der Fahrzeugkarosserie, beispielsweise bezüglich des mit einer oberen Scheibendichtung 69a versehenen Dachrahmens 69 ermittelt werden.

Der Endschalter 9 umfasst einen Taster 91 sowie eine innerhalb eines nichtleitenden Gehäuses 90 angeordnete elektrische Baugruppe, mit der eine Auslenkung des Tasters 91 ermittelbar ist. Der Taster 91 erstreckt sich in das Innere des Gehäuses 90 und weist dort einen Kontaktabschnitt 91 a auf, der je nach Stellung des Tasters 91 mit einem von zwei als Minus-Polen ausgebildeten elektrischen Kontakten 93, 95 in Kontakt bringbar ist. Die Position dieser elektrischen Kontakte 93, 95, von denen einer mittels einer Feder 96 elastisch vorgespannt ist, kann mittels zugeordneter Stellschrauben 94, 97 eingestellt werden.

In seinem nicht ausgelenkten Zustand ist der Taster 91 mittels eines elastischen Elementes 92 (Schraubenfeder als Druckfeder) gegen einen dieser beiden Kontakte (nämlich gegen den oberen elektrischen Kontakt 93) vorgespannt. Fährt nun die Fensterscheibe F mit ihrer Oberkante in die zugeordnete Scheibendichtung 69a ein, so tritt der Taster 91 in Kontakt mit dem Dachrahmen 69 und wird entgegen der Vorspannung des Federelementes 92 ausgelenkt. Hierbei tritt der Kontaktabschnitt 91 a des Tasters 91 zunächst außer Kontakt mit dem oberen elektrischen Kontaktelement 93 und gerät nach einer definierten Auslenkung schließlich in Kontakt mit dem anderen, unteren Kontaktelement 95.

Eine elektrische Kontaktierung (sowohl des Kontaktabschnittes 91a mit dem oberen elektrischen Kontaktelement 93 als auch des Kontaktabschnittes 91a mit dem unteren elektrischen Kontaktelement 95) wird mittels jeweils einer LED 99a, 99b angezeigt. Der entsprechende Stromkreis wird durch einen elektrischen Pluspol 98 zur Verfügung gestellt.

Ziel ist es, die Grundplatte 7 (Vergleiche Figuren 1 bis 5) derart auszurichten, daß die Fensterscheibe 7 (die über den Mitnehmer 75 von der Grundplatte 7 getragen wird) derart bezüglich der Scheibendichtung 69a ausgerichtet ist, daß keine der beiden LED 99a, 99b leuchtet. In diesem Fall befindet sich der Kontaktabschnitt 91a des Tasters 91 in einer Mittellage zwischen dem oberen elektrischen Kontakt 93 und dem unteren elektrischen Kontakt 95. Dem entspricht die gewünschte Position der Scheibenoberkante bezüglich der Scheibendichtung 69a.

Dies ermöglicht eine Einstellung der räumlichen Lage der Grundplatte 7 des Fensterhebers innerhalb der Fahrzeugkarosserie 6 anhand der Position der Fensterscheibe F innerhalb des Fensterrahmens. Hierfür ist es selbstverständlich erforderlich, die Fensterscheibe mittels des Fensterhebers in eine definierte Position zu verfahren, bevor die Grundplatte 7 des Fensterhebers anhand der Position der Fensterscheibe F bezüglich des Fensterrahmens ausgerichtet wird.

Sofern mehrere Endschalter der in den Figuren 6a und 6b dargestellten Art vorgesehen sind, kann zur Erleichterung der Bedienung der Steuereinrichtung vorgesehen sein, daß diese aus den Signalen der Endschalter automatisch einen Vorschlag für die Justierung der Grundplatte 7 unterbreitet, der der jeweiligen Bedienperson auf einer Anzeige angezeigt wird. Alternativ kann vorgesehen sein, daß die Steuereinrichtung in Abhängigkeit von den durch die Endschalter erzeugten Signale automatisch eine Justierung der Grundplatte 7 vornimmt.

In Fig. 7 ist schematisch der prinzipielle Aufbau eines Aktors 2 dargestellt, der Betätigungsmittel zum Ergreifen und Betätigen sowohl einer Stellschraube 8 als auch einer zugeordneten Kontermutter 86 aufweist. Die Stellschraube 8 ist dabei mit ihrem Gewindeabschnitt 80 in ein Gegengewinde 70 einer Grundplatte 7 eines Fensterhebers eingeschraubt und liegt mit einer Wulst 85 an dem Rand einer Öffnung 63 eines Halteteiles 62 an, die von der Stellschraube 8 durchgriffen wird, entsprechend der Darstellung in Fig. 2b.

Die Betätigungsmittel des Aktors 2 umfassen zwei konzentrische Wellen 20, 25, von denen die äußere Welle 25 als eine die innere Welle 20 umfassende Hohlwelle ausgebildet ist. Die innere Welle 20 weist an ihrem einen Ende ein Werkzeug 21 (Torx) auf, das zur Betätigung der Stellschraube 8 mittels einer Drehbewegung vorgesehen ist. In entsprechender Weise weist die äußere Welle 25 an ihrem einen Ende ein Werkzeug 26 (Innenmehrkant) auf, das zur Betätigung einer Kontermutter 86 ausgebildet ist.

Mit dem anderen Ende der Wellen 20, 25 ist ein Antrieb koppelbar, mit dem eine Drehbewegung der Wellen 20, 25 erzeugbar ist. Zusätzlich sind die beiden Wellen 20, 25 in der Ebene der Durchgangsöffnungen 63 bewegbar, um die Stellschrauben 8 in den Durchgangsöffnungen 63 (die ja ein Übermaß bezüglich des Querschnitts des Schaftes der Stellschrauben 8 aufweisen) verschieben zu können.

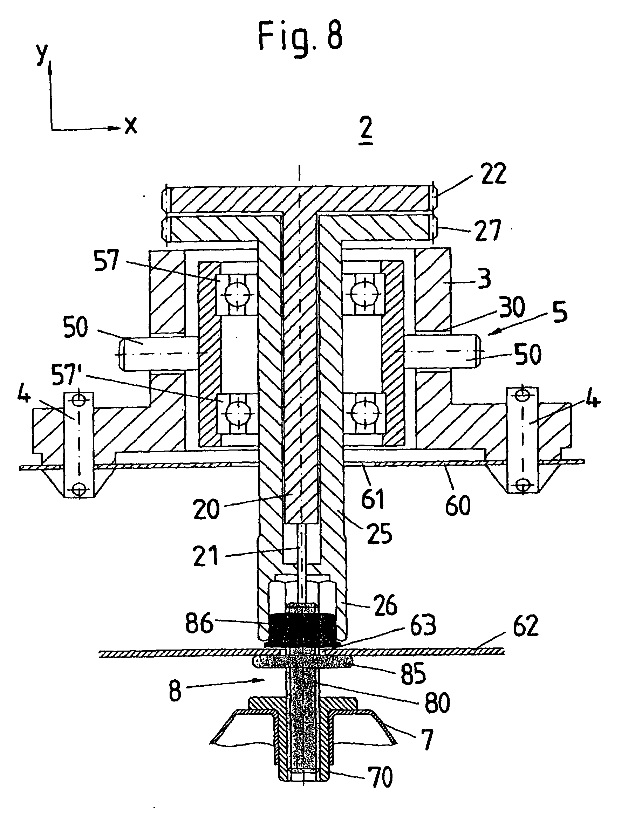

In Fig. 8 ist ein erstes Ausführungsbeispiel eines Aktors dargestellt, dessen Betätigungsmittel nach dem in Fig. 7 gezeigten Prinzip gestaltet sind.

Die beiden koaxialen Wellen 20, 25 weisen dabei an ihrem antriebsseitigen Ende jeweils Verzahnungen 20, 27 auf, so daß sie unabhängig voneinander sowohl einzeln als auch gemeinsam angetrieben werden können. Der einzelne Antrieb der äußeren Welle 25 bei gleichzeitig festgehaltener innerer Welle 20 dient dabei dazu, die Kontermutter 85 auf die Stellschraube aufzuschrauben bzw. von dieser zu lösen. Bei einer gemeinsamen Betätigung der beiden Wellen 20, 25 kann die Einschraubtiefe der Stellschraube 8 in dem Gegengewinde 70 der Grundplatte 7 variiert werden, während gleichzeitig das Halteteil 62 mit einem konstanten Spiel zwischen der Wulst 85 der Stellschraube 8 und der Kontermutter 86 aufgenommen bleibt.

Die beiden Wellen 20, 25 sind in einem Gehäuse 3 des Aktors 2 gelagert, das mittels Schnappelementen 4 lösbar an einem Abschnitt 60 der Fahrzeugkarosserie befestigt ist, wobei die Wellen 20, 25 eine Öffnung 61 der Fahrzeugkarosserie durchgreifen, die ein Übermaß bezüglich des Querschnittes der Wellen 20, 25 aufweist. Hierdurch ist eine Bewegung der Wellen 20, 25 in der Ebene der Durchgangsöffnungen 61 bzw. der hierzu parallelen Ebene der Durchgangsöffnungen 63 in den Halteteilen 62 möglich.

Zur Erzeugung einer solchen Bewegung sind die Lager 57, 57' der Wellen 20, 25 in der Ebene senkrecht zur Fahrzeugquerachse y verschiebbar, und zwar sowohl entlang der Fahrzeugslängsachse x als auch entlang der vertikalen Fahrzeugachse z.

Wie in der Querschnittsdarstellung gemäß Fig. 8 erkennbar, ragen von den Lagern 57, 57' in Fahrzeuglängsrichtung x Bolzen 50 ab, die als Träger für die Lager 57, 57' dienen und die längsbeweglich in dem Gehäuse 3 des Aktors 2 geführt sind. Mittels eines geeigneten Antriebs können diese Bolzen in Fahrzeugslängsrichtung x verschoben werden, was eine entsprechende Verschiebung der Lager 57, 57' und damit der Wellen 20, 25 des Aktors 2 zur Folge hat. Diese überträgt sich wiederum auf die von den Wellen 20, 25 gehaltene Stellschraube 8 und Kontermutter 86, so daß diese in Fahrzeuglängsrichtung x verschoben werden und dabei die Grundplatte 7 des Fensterhebers mitnehmen. In entsprechender Weise wird auch die Verstellbarkeit entlang der vertikalen Fahrzeugachse z sichergestellt.

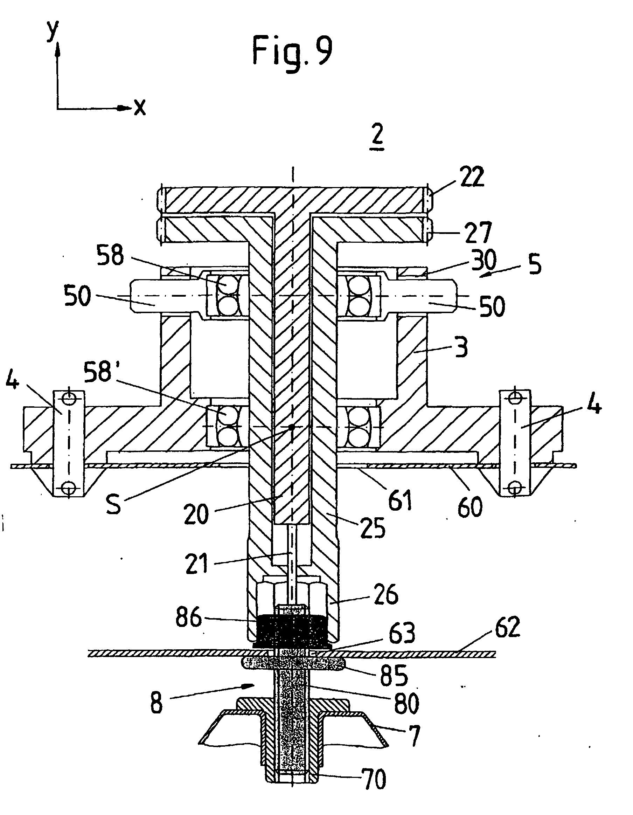

Das in Fig. 9 dargestellte Ausführungsbeispiel eines Aktors 2 unterscheidet sich von dem Ausführungsbeispiel gemäß Fig. 8 dadurch, daß die Lager 58, 58' der Wellen 20, 25 als Pendellager ausgebildet sind. Durch eine Verschiebung des von einem der Lager (nämlich dem oberen Lager 58) abstehenden Bolzen 50 in Fahrzeuglängsrichtung x wird in diesem Fall eine Schwenkbewegung der Wellen 20, 25 um einen mit dem Mittelpunkt des unteren Lagers 58' zusammenfallenden Schwenkpunkt S erzeugt. Diese Schwenkbewegung führt bei kleinen Auslenkungen zu einer Verschiebung der Stellschraube 8 innerhalb der zugeordneten Durchgangsöffnung 63 des Halteteils 62 und damit zu einer entsprechenden Verschiebung der Grundplatte 7 in Fahrzeugslängsrichtung x. Auch hier ist wiederum eine entsprechende Verstellmöglichkeit in Richtung der vertikalen Fahrzeugachse z vorgesehen.

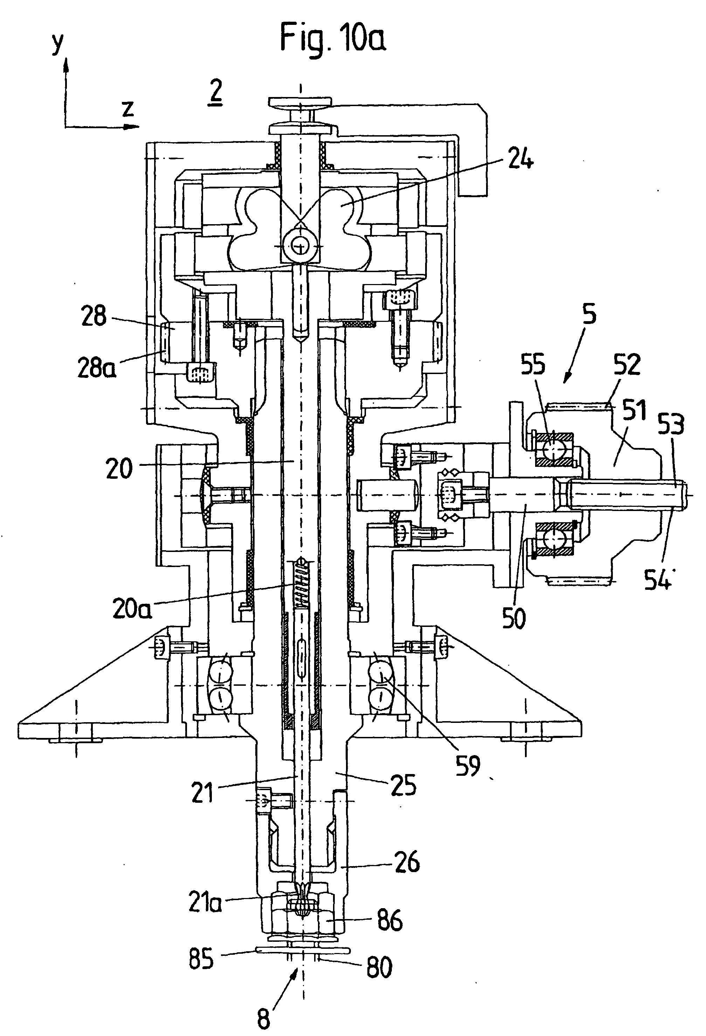

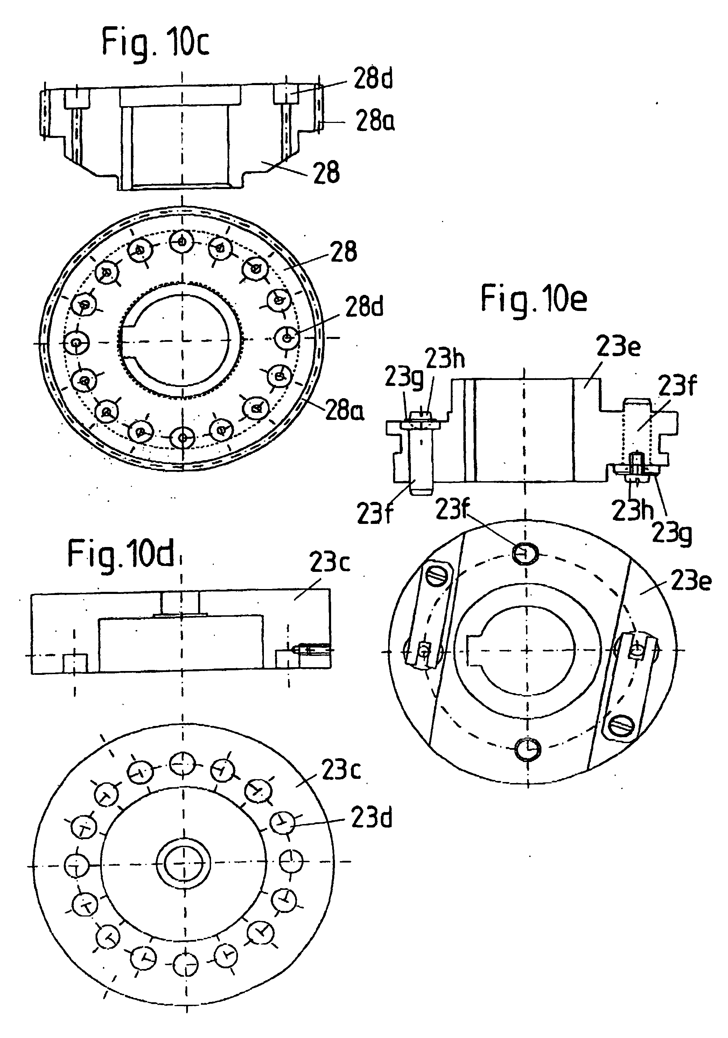

Bei dem in Fig. 10a gezeigten Aktor wird das Drehmoment zur Bewegung der Wellen 20, 25 über die Außenverzahnung 28a eines Zahnrades 28 in die äußere Welle 25 eingeleitet und mittels einer Reib-/Rutschkupplung 24 wahlweise zusätzlich auf die innere Wellen 20 übertragen. Das Zahnrad 28 wird dabei mittels eines in Fig. 10a nicht dargestellten Antriebsmotors mit einem nachgeschalteten, zum Eingriff in die Außenverzahnung 28a geeigneten Getriebeelement angetrieben. Es können hiermit also wahlweise nur die äußere Welle 25 (was bei gleichzeitig festgehaltener innerer Welle 20 je nach Drehrichtung einem Lösen oder Anziehen der Schraubverbindung 8, 86 entspricht) oder beide Wellen 20, 25 angetrieben werden.

Zusätzlich ist hier das mit einem Werkzeugkopf 21a versehene und zur Betätigung der Stellschraube 8 dienende Werkzeug 21 der inneren Welle 20 mittels eines Federelementes 20a in Fahrzeugquerrichtung y elastisch gelagert.

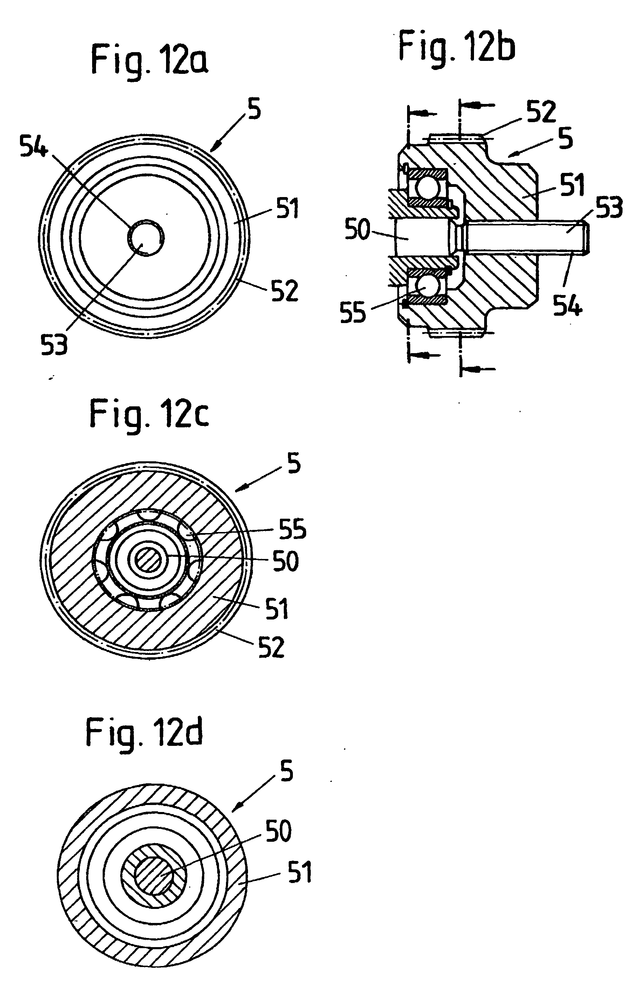

In Fig. 10a sowie in Detaildarstellungen gemäß den Figuren 12a bis 12d ist außerdem ein Teil des Antriebsmechanismus erkennbar, mittels dem ein Bolzen 50 des Aktors 2 in Fahrzeuglängsrichtung x verschiebbar ist, um die in einem Pendellager 59 gelagerten Wellen 20, 25 zu verschwenken. Der Antriebsmechanismus 5 umfaßt ein Zahnrad 51, das über eine Außenverzahnung 52 antreibbar ist und das mit einer mit einem Gewinde 54 versehenen Spindel 53 zusammenwirkt, die eine Drehbewegung des Zahnrades 51 in eine Längsbewegung umsetzt. Diese Spindel 53 wirkt auf den Bolzen 50 ein und kann diesen in Fahrzeugslängsrichtung x verschieben.

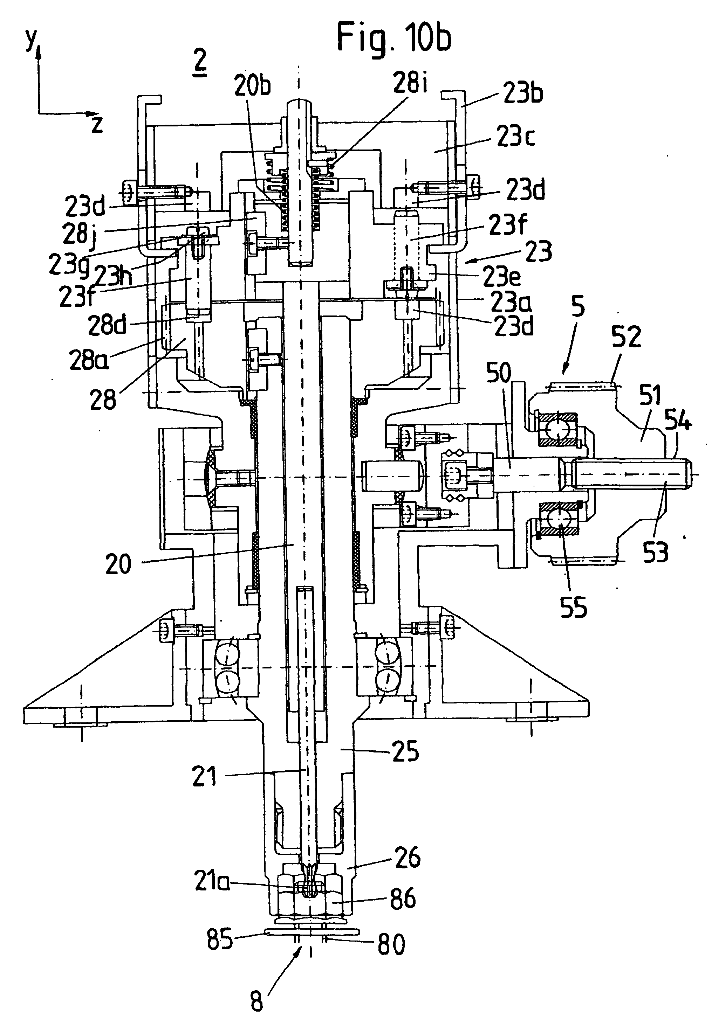

In den Figuren 10b bis 10e ist eine Abwandlung des Ausführungsbeispiels aus Fig. 10a dargestellt, die sich im wesentlichen in der Gestaltung der verwendeten Kupplung 23 unterscheidet, mittels der die innere Welle 20 wahlweise mit dem die äußere Welle 25 antreibenden Zahnrad 28 koppelbar ist, wobei außerdem die innere Welle 20 mittels einer Druckfeder 20b elastisch vorgespannt ist.

Die Kupplung 28 umfaßt:
- eine Kupplungshülle 23a;
- eine entlang der Wellen 20, 25 (axial in y-Richtung) verschieblich gelagerte Schaltklaue 23b;
- einen mit sechzehn Eingriffsbohrungen 23d (Eingriffsöffnungen) versehenen, drehfest gelagerten Kupplungsdekkel 23c;
- sechzehn Eingriffsbohrungen 28d (Eingriffsöffnungen) des Zahnrades 28;
- eine in axialer Richtung verschieblich gelagerte Kupplungsscheibe 23e mit vier Kupplungsbolzen 23f, die wiederum axial verschieblich an der Kupplungsscheibe 23e gelagert sind und die mittels Blattfedern 23g, welche durch Halteschrauben 28h gehalten werden, in axialer Richtung elastisch vorgespannt sind;
- eine Schaltfeder 28i und eine Paßfeder 28j.

Die Kupplungsscheibe 23e ist mittels der Schaltfeder 28i derart axial vorgespannt, daß mindestens ein Kupplungsbolzen 23f in eine Eingriffsbohrung 28d des Zahnrades 28 eingreift. Hierdurch wird eine Drehbewegung des Zahnrades 28 über die Kupplungsbolzen 23f und die Kupplungsscheibe 23e auf die innere Welle 20 übertragen, die sich somit gemeinsam mit der (mit dem Zahnrad 28 mitdrehend verbundenen) äußeren Welle 25 drehen kann.

Mittels der Schaltklaue 23b (die z.B. durch einen Elektromagneten betätigt werden kann) läßt sich die Kupplungsscheibe 23e derart entgegen der Wirkung der Schaltfeder 23i axial verschieben, daß der oder die Kupplungsbolzen 23f aus den Eingriffsbohrungen 28d des Zahnrades 28 ausgehoben werden. Die innere Welle 20 ist dann von dem Zahnrad 28 entkoppelt. Ferner gerät hierbei mindestens ein Kupplungsbolzen 23f in Eingriff mit einer Eingriffsbohrung 23d des drehfest gelagerten Kupplungsdeckels 23c, so daß die innere Welle 20 und damit das entsprechende Werkzeug 21 drehfest gehalten werden, während gleichzeitig die äußere Welle 25 über das Zahnrad 28 angetrieben werden kann.

Wird durch entsprechendes Betätigen des Elektromagneten die Schaltklaue 23b bei Bedarf wieder freigegeben, so gerät die Kupplungsscheibe 23e (über die Kupplungsbolzen 23f und Eingriffsbohrungen 28d) erneut in Eingriff mit dem Zahnrad 28.

Durch die axiale Anfederung der Kupplungsbolzen 23f mittels der Blattfedern 23g wird dabei sichergestellt, daß mindestens ein Kupplungsbolzen 23f auch dann bei einer axialen Verschiebung der Kupplungsscheibe 23e unter der Wirkung der Schaltfeder 23i oder der Schaltklaue 23b mit einer zugeordneten Eingriffsbohrung 23d bzw. 28d in Eingriff gerät, wenn sich der entsprechende Kupplungsbolzen 23f zunächst in einer Zwischenstellung zwischen zwei Eingriffsbohrung 23d bzw. 28d befindet und somit zunächst an der Oberfläche des Kupplungsdeckels 23c bzw. des Zahnrades 28 anliegt.

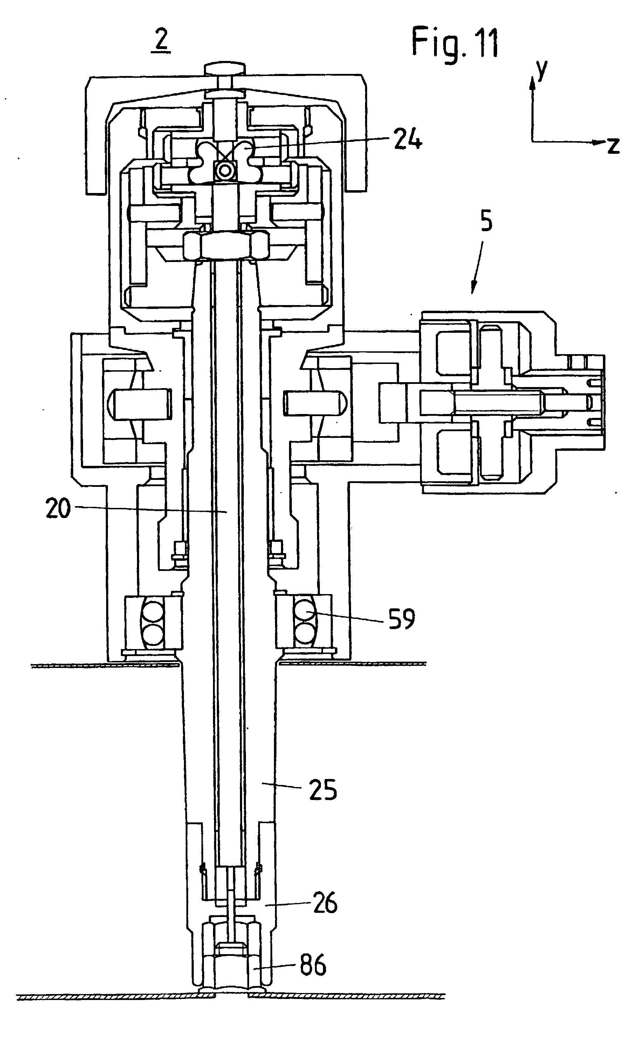

Fig. 11 zeigt eine weitere Abwandlung des Ausführungsbeispiels aus Fig. 10a, wobei die Unterschiede im wesentlichen in der Ausbildung des verwendeten Antriebsmechanismus zur Verschiebung des Bolzens 50 in Fahrzeuglängsrichtung x sowie in der Lagerung des Werkzeugs 21 der inneren Welle 20 bestehen.

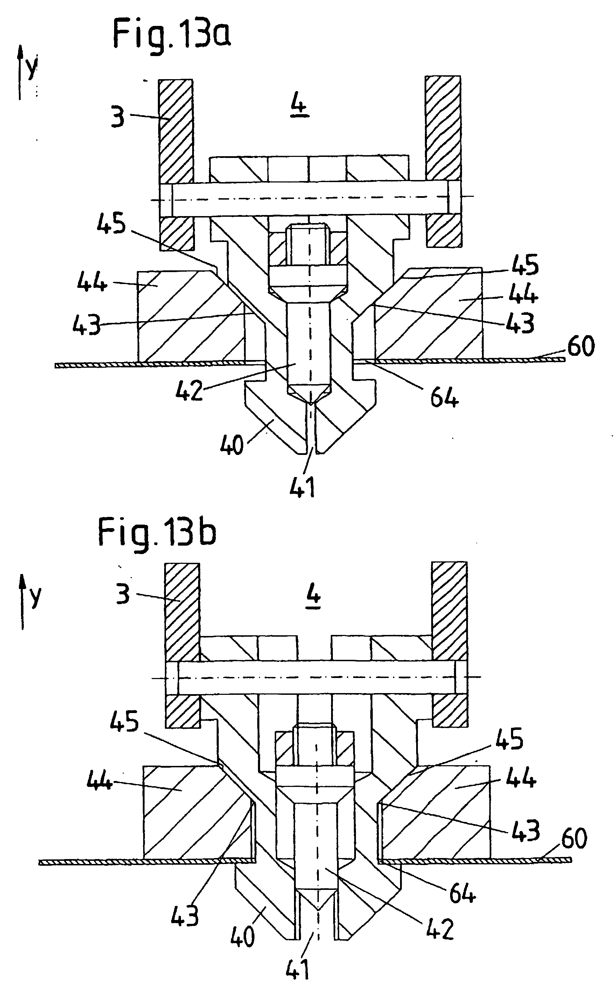

In Fig. 13a ist ein Schnappelement 4 dargestellt, das an dem Gehäuse 3 eines Aktors festgelegt ist und das zur lösbaren Befestigung des Aktors an einem Abschnitt 60 der Fahrzeugkarosserie dient.

Das Schnappelement 4 weist einen mit einer konischen Einführschräge versehenen und durch einen zentralen Schlitz 41 geteilten spreizbaren Endabschnitt 41 auf, der (von dem Gehäuse 3 des Aktors aus gesehen) hinter dem Abschnitt 60 der Karosserie liegt, wenn das Schnappelement 4 in eine zugeordnete Öffnung 64 des Abschnittes 60 der Fahrzeugkarosserie eingeführt ist. In diesem Schlitz 41 ist ein Dom 42 einschiebbar, der den spreizbaren Abschnitt 40 des Schnappelementes 4 aufspreizt, wobei die beiden durch den Schlitz 41 geteilten Teile des Schnappelementes 4 gegen den Rand der Öffnung 64 gepreßt werden. Die entsprechende Bewegung wird sichergestellt durch Schrägflächen 43 der beiden Teile des Schnappelementes 4, die mit entsprechenden Schrägflächen 45 eines Führungselementes 44 des Schnappelementes 4 zusammenwirken.

Der Zustand des Schnappelementes, in dem eine lösbare Verbindung zwischen dem Aktor und einem Abschnitt 60 der Fahrzeugkarosserie hergestellt ist, ist in Fig. 13b erkennbar. Zum Lösen dieser Verbindung ist es lediglich erforderlich, den Dom 42 wieder aus dem Schlitz 41 herauszuziehen.

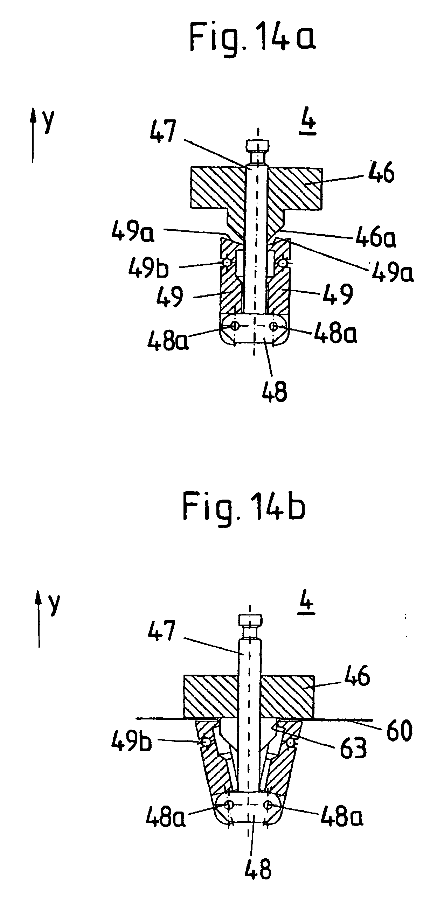

In Fig. 14a ist ein weiteres Ausführungsbeispiel eines Schnappelementes dargestellt, das zur Befestigung eines Aktors an der Fahrzeugkarosserie dienen kann.

Dieses Schnappelement umfaßt eine Grundplatte 46, die an dem Rand einer zugeordneten Öffnung 63 in einem Abschnitt 60 der Fahrzeugkarosserie anliegt und die mit einem sich konisch verjüngenden Endabschnitt 46a diese Öffnung 63 durchgreift. In der Grundplatte 46 ist ein Spann- und Rückführungsdom 47 geführt, der an seinem einen Ende eine Halteplatte 48 aufweist. An zwei Drehachsen 48a dieser Platte 48 sind Spannbacken 49 gelagert, die durch ein Ziehen am Dom 47 (vergl. Fig. 14b) aufgespreizt werden können, wobei die Spannbacken 49 mit abgeschrägten Stirnflächen 49a über den sich konisch verjüngenden Abschnitt 46a der Grundplatte 46 gleiten. Hierbei legen sich die Spannbacken 49 mit ihren abgeschrägten Stirnseiten 49a an den Rand der Öffnung 63 an, so daß ein Formschluß zwischen dem Abschnitt 60 der Fahrzeugkarosserie und dem Schnappelement 4 entsteht.

Um ein unbeabsichtigtes Aufspreizen der Spannbacken 49 zu verhindern, ist eine Rückhaltefeder 49b vorgesehen, die dem Aufspreizen der Spannbacken 49 entgegenwirkt.

## Patentansprüche

1. Anordnung zur Verbindung einer Grundplatte eines Fensterhebers mit einer Kraftfahrzeugkarosserie, mittels der die Grundplatte (7) an mindestens zwei Befestigungsstellen mit der Karosserie (6, 60) verbindbar ist, mit
Befestigungselementen (8), die an der Grundplatte (7) festgelegt sind und denen an den Befestigungsstellen jeweils Durchgangsöffnungen (63) mit Übermaß zugeordnet sind, die von den Befestigungselementen (8) durchgriffen werden und in denen die Befestigungselemente (8) in einer Ebene (E) bewegbar sind,
**dadurch gekennzeichnet, dass**
- Aktoren (2, 2', 2"), die den Befestigungsstellen zugeordnet und lösbar mit der Karosserie (6, 60) oder einer bezüglich der Karosserie (6, 60) räumlich fixierten Struktur verbunden sind, wobei die Aktoren (2, 2', 2") eingerichtet sind zur Betätigung und zum Halten jeweils eines der Befestigungselemente (8), und
- einer Steuereinrichtung (1), mittels der die Aktoren (2, 2', 2" ) derart steuerbar sind, daß die räumliche Lage der Befestigungselemente (8) durch die Aktoren (2, 2', 2") sowohl in der Ebene (E) der Durchgangs öffnungen (63) als auch senkrecht dazu einstellbar ist.

2. Anordnung nach Anspruch 1, **dadurch gekennzeichnet, daß** die Grundplatte (7) eine Führung für einen Mitnehmer (75) des Fensterhebers aufweist, der zur Aufnahme einer Fensterscheibe (F) vorgesehen ist.

3. Anordnung nach Anspruch 2, **dadurch gekennzeichnet, daß** die Grundplatte (7) mehrere Führungen für Mitnehmer (75) aufweist.

4. Anordnung nach Anspruch 2 oder 3, **dadurch gekennzeichnet, daß** die Führung einstückig in die Grundplatte (7) integriert ist.

5. Anordnung nach einem der vorhergehenden Ansprüche, **dadurch gekennzeichnet, daß** die Befestigungselemente (8) in der Ebene (E) entlang zweier Achsen (x, z) bewegbar sind.

6. Anordnung nach einem der vorhergehenden Ansprüche, **dadurch gekennzeichnet, daß** die Steuerung der Aktoren (2, 2',2") anhand der Lage der mit dem Fensterheber zu verstellenden Fensterscheibe (F) bezüglich eines zugeordneten Fensterrahmens (68, 69) erfolgt.

7. Anordnung nach Anspruch 6, **dadurch gekennzeichnet, daß** mindestens ein Sensor (9) vorgesehen ist, der die Lage der Fensterscheibe (F) bezüglich des Fensterrahmens (68, 69), insbesondere bezüglich einer Scheibendichtung (69a), erfaßt.

8. Anordnung nach Anspruch 7, **dadurch gekennzeichnet, daß** derSensor (9) durch einen Endschalter gebildet wird.

9. Anordnung nach einem der vorhergehenden Ansprüche, **dadurch gekennzeichnet, daß** den Aktoren (2, 2', 2") mindestens ein Antrieb zugeordnet ist, der mit der Steuereinrichtung (1) gekoppelt ist und der die Betätigung der Befestigungselemente (8) sowie die Einstellung von deren räumlicher Lage aufgrund von Steuersignalen der Steuereinrichtung (1) bewirkt.

10. Anordnung nach Anspruch (9), **dadurch gekennzeichnet, daß** der Antrieb einen eine Verstellspindel (51) umfassenden Antriebsmechanismus (5) aufweist.

11. Anordnung nach einem der Ansprüche 6 bis 10, **dadurch gekennzeichnet, daß** die Aktoren (2, 2', 2") von der Steuereinrichtung (1) automatisch in Abhängigkeit von der Lage der Fensterscheibe (F) gesteuert werden.

12. Anordnung nach einem der Ansprüche 6 bis 10, **dadurch gekennzeichnet, daß** von der Steuereinrichtung (1) in Abhängigkeit von der Lage der Fensterscheibe (F) ein Vorschlag für die Einstellung der Grundplatte (7) mittels der Aktoren (2, 2', 2") ermittelt und auf einer Anzeige (12) der Steuereinrichtung (1) angezeigt wird.

13. Anordnung nach einem der vorhergehenden Ansprüche, **dadurch gekennzeichnet, daß** die Befestigungselemente (8) durch eine Drehbewegung betätigbar sind und daß die Aktoren (2, 2', 2") zur Erzeugung einer Drehbewegung der Befestigungsmittel (8) ausgebildet sind.

14. Anordnung nach einem der vorhergehenden Ansprüche, **dadurch gekennzeichnet, daß** die Befestigungselemente (8) durch Schrauben gebildet werden.

15. Anordnung nach Anspruch (14), **dadurch gekennzeichnet, daß** die Schrauben (8) in ein Gegengewinde (70) der Grundplatte (7) eingeschraubt und dadurch an dieser festgelegt sind, wobei die Einschraubtiefe der Schrauben (8) in dem Gewinde (70) der Grundplatte (7) variabel ist.

16. Anordnung nach Anspruch 14 über 15, **dadurch gekennzeichnet, daß** jeder Schraube (8) eine Mutter (86) zugeordnet ist.

17. Anordnung nach Anspruch 16, **dadurch gekennzeichnet, daß** mittels der Aktoren (2, 2', 2") sowohl die Schrauben (8) als auch die zugeordneten Muttern (86) betätigbar sind.

18. Anordnung nach Anspruch 17, **dadurch gekennzeichnet, daß** der jeweilige Aktor (2, 2', 2") zur Betätigung sowohl einer Schraube (8) als auch einer Mutter (86) zwei konzentrische Wellen (20, 25) aufweist, von denen mindestens eine als Hohlwelle ausgebildet ist.

19. Anordnung nach Anspruch 17 oder 18, **dadurch gekennzeichnet, daß** mittels eines Aktors (2, 2', 2") eine Schraube (8) und eine Mutter (86) gleichzeitig betätigbar sind, wobei die Schraube (8) zusammen mit der Mutter (86) entlang der Erstreckungsrichtung (y) der Schraube (8) bewegbar ist.

20. Anordnung nach einem der Ansprüche 14 bis 19, **dadurch gekennzeichnet, daß** sich die Schrauben (8) senkrecht zu der Ebene (E) erstrecken.

21. Anordnung nach einem der vorhergehenden Ansprüche, **dadurch gekennzeichnet, daß** die Grundplatte (7) und die Karosserie (6) an drei Befestigungsstellen miteinander verbunden sind.

22. Anordnung nach einem der vorhergehenden Ansprüche, **dadurch gekennzeichnet, daß** die zur Betätigung der Befestigungselemente (8) vorgesehenen Betätigungsmittel (20, 25) mindestens eines Aktors (2, 2', 2") in der Ebene (E) bewegbar sind.

23. Anordnung nach Anspruch 22, **dadurch gekennzeichnet, daß** die Betätigungsmittel (20, 25) in der Ebene (E) verschiebbar gelagert sind.

24. Anordnung nach Anspruch 22, **dadurch gekennzeichnet, daß** die Betätigungsmittel (20, 25) mittels eines Kugelgelenkes (58, 58' 59) gelenkig gelagert sind.

25. Anordnung nach einem der Ansprüche 22 bis 24, **dadurch gekennzeichnet, daß** die Betätigungsmittel (20, 25) eines Aktors (2) mit den Betätigungsmitteln (20, 25) mindestens eines anderen Aktors (2') mechanisch gekoppelt sind.

26. Anordnung nach einem der Ansprüche 22 bis 24, **dadurch gekennzeichnet, daß** die Betätigungsmittel (20, 25) der Aktoren (2, 2', 2") jeweils unabhängig voneinander steuerbar sind.

27. Anordnung nach einem der vorhergehenden Ansprüche, **dadurch gekennzeichnet, daß** die Aktoren (2, 2', 2") auf einem gemeinsamen Träger (35) angeordnet sind.

28. Anordnung nach Anspruch 27, **dadurch gekennzeichnet, daß** der Träger (35) ortsfest mit der Karosserie (6, 60) verbunden ist.

29. Anordnung nach Anspruch 27, **dadurch gekennzeichnet, daß** der Träger (35) in der Ebene (E) beweglich an der Karosserie (6, 60) gelagert und mittels der Steuereinrichtung (1) in der Ebene (E) verschiebbar ist.

30. Anordnung nach einem der vorhergehenden Ansprüche, **dadurch gekennzeichnet, daß** die Grundplatte (7) in Richtung auf die Karosserie (60) elastisch vorgespannt ist.

31. Anordnung nach einem der vorhergehenden Ansprüche, **dadurch gekennzeichnet, daß** die Aktoren (2, 2', 2") jeweils mittels Schnappelementen (4) mit der Karosserie (6, 60) verbunden sind.

32. Verfahren zur Verbindung einer Grundplatte eines Fensterhebers mit einer Kraftfahrzeugkarosserie, wobei
die Grundplatte (7) an mindestens zwei Befestigungsstellen mit der Karosserie (6) verbunden wird, unter Verwendung von Befestigungselementen (8), die an der Grundplatte (7) festgelegt sind und denen an den Befestigungsstellen jeweils Durchgangsöffnungen (63) mit Übermaß zugeordnet sind, die von den Befestigungselementen (8) durchgriffen werden und in denen die Befestigungselemente (8) in einer Ebene (E) bewegbar sind,
**dadurch gekennzeichnet, dass**
a) Aktoren (2, 2', 2"), die den einzelnen Befestigungsstellen zugeordnet sind, lösbar mit der Karosserie (6, 60) oder mit einer bezüglich der Karosserie (6, 60) räumlich fixierten Struktur verbunden werden, wobei mittels der Aktoren (2, 2', 2") die Befestigungselemente (8) betätigt und gehalten werden können, und
b) eine Steuereinrichtung (1) die Aktoren (2, 2', 2") derart steuert, daß die räumliche Lage der Befestigungselemente (8) durch die Aktoren (2, 2', 2") sowohl in der Ebene (E) der Durchgangsöffnungen (63) als auch senkrecht dazu einstellbar ist.

## Claims

1. Arrangement for connecting a base plate of a window lifter to a vehicle body, by means of which the base plate (7) can be connected to the body (6, 60) at at least two fixing points, with
- fixing elements (8) which are secured on the base plate (7) and are associated with oversized through openings (63) at the fixing points through which the fixing elements (8) are passed and in which the fixing elements (8) can be moved in a plane (E),
**characterised in that,**
- actuators (2, 2', 2'') which are associated with fixing points and are detachably connected to the body (6, 60) or to a structure which is fixed spatially relative to the body (6, 60) whereby the actuators (2, 2',2'') are set up for actuating and holding one each of the fixing elements (8), and
- a control device (1) by means of which the actuators (2, 2', 2'') can be controlled so that the spatial position of the fixing elements (8) can be adjusted by the actuators (2, 2' , 2'') both in the plane (E) of the through openings (63) and perpendicular thereto.

2. Arrangement according to claim 1 **characterised in that,** the base plate (7) has a guide for a follower (75) of the window lifter which is provided for holding the window pane (F).

3. Arrangement according to claim 2 **characterised in that**, the base plate (7) has several guides for followers (75).

4. Arrangement according to claim 2 or 3 **characterised in that**, the guide is integrated in one piece into the base plate (7).

5. Arrangement according to one of the preceding claims **characterised in that**, the fixing elements (8) are movable in the plane (E) along two axes (x, z).

6. Arrangement according to one of the preceding claims **characterised in that,** the control of the actuators (2, 2',2'') is undertaken from the position of the window pane (F) to be adjusted by the window lifter relative to an associated window frame (68, 69).

7. Arrangement according to claim 6 **characterised in that**, at least one sensor (9) is provided which detects the position of the window pane (F) relative to the window frame (68, 69), more particularly relative to a window pane seal (69a).

8. Arrangement according to claim 7 **characterised in that**, the sensor (9) is formed by a limit switch.

9. Arrangement according to one of the preceding claims **characterised in that**, the actuators (2, 2', 2'') are associated with at least one drive which is coupled to the control device (1) and which generates the actuation of the fixing elements (8) and the adjustment of their spatial position as a result of control signals of the control device (1).

10. Arrangement according to claim 9 **characterised in that**, the drive has a drive mechanism (5) comprising an adjusting spindle (51) .

11. Arrangement according to one of claims 6 to 10 **characterised in that,** the actuators (2, 2'2, 2'') are controlled by the control device (1) automatically in dependence on the position of the window pane (F).

12. Arrangement according to one of claims 6 to 10 **characterised in that**, a proposal for adjusting the base plate (7) by means of the actuators (2, 2', 2'') is recognized by the control device (1) in dependence on the position of the window pane (F) and is displayed on a display (12) of the control device (1).

13. Arrangement according to one of the preceding claims **characterised in that**, the fixing elements (8) are actuated by a rotational movement and that the actuators (2, 2',2'') are formed for producing a rotational movement of the fixing means (8).

14. Arrangement according to one of the preceding claims **characterised in that**, the fixing elements (8) are formed by screws.

15. Arrangement according to claim 14 **characterised in that,** the screws (8) are screwed into a counter thread (70) of the base plate (7) and are fixed on same whereby the screw-in depth of the screws in the thread (70) of the base plate (7) is variable.

16. Arrangement according to claim 14 or 15 **characterised in that**, each screw (8) is allotted a nut (86).

17. Arrangement according to claim 16 **characterised in that**, both the screws (8) and the associated nuts (86) can be actuated by means of the actuators (2, 2' 2'').

18. Arrangement according to claim 17 **characterised in that,** the relevant actuator (2, 2', 2'') for actuating both a screw (8) and a nut (86) has two concentric shafts (20, 25) of which at least one is formed as a hollow shaft.

19. Arrangement according to claim 17 or 18 **characterised in that**, one screw (8) and one nut (86) can be actuated simultaneously by means of one actuator (2, 2', 2'') whereby the screw (8) can be moved together with the nut (86) along the extension direction (y) of the screw (8).

20. Arrangement according to one of claims 14 to 19 **characterised in that,** the screws (8) extend perpendicular to the plane (E).

21. Arrangement according to one of the preceding claims **characterised in that,** the base plate (7) and the body (6) are connected together at three fixing points.

22. Arrangement according to one of the preceding claims **characterised in that**, the actuating means (20, 25) provided for actuating the fixing elements (8) are movable in the plane (E) by means of at least one actuator (2, 2', 2'').

23. Arrangement according to claim 22 **characterised in that**, the actuating means (20, 25) are mounted movable in the plane (E).

24. Arrangement according to claim 22 **characterised in that**, the actuating means (20, 25) are mounted for articulated movement by means of a ball joint (58, 58', 59).

25. Arrangement according to one of claims 22 to 24 **characterised in that,** the actuating means (20, 25) of one actuator (2) are mechanically coupled to the actuating means (20, 25) by means of another actuator (2').

26. Arrangement according to one of claims 22 to 24 **characterised in that,** the actuating means (20, 25) of the actuators (2, 2', 2'') are controllable independently of each other.

27. Arrangement according to one of the preceding claims **characterised in that,** the actuators (2, 2',2'') are mounted on a common support (35).

28. Arrangement according to claim 27 **characterised in that**, the support (35) is connected locally fixed to the body (6, 60).

29. Arrangement according to claim 27 **characterised in that**, the support (35) is mounted movable in the plane (E) on the body (6, 60) and is displaceable in the plane (E) by means of the control device (1).

30. Arrangement according to one of the preceding claims **characterised in that**, the base plate (7) is elastically pretensioned towards the body (60).

31. Arrangement according to one of the preceding claims **characterised in that,** the actuators (2, 2', 2'') are each connected to the body (6, 60) by means of snap-fit elements (4).

32. Method for connecting a base plate of a window lifter to a vehicle body wherein
the base plate (7) is connected to the body (6) at at least two fixing points, by using fixing elements (8) which are fixed on the base plate (7) and which are associated with oversized through openings (63) at the fixing points, through which the fixing elements (8) pass and in which the fixing elements (8) can be moved in one plane (E)
**characterised in that**,,
a) actuators (2, 2', 2 " ) which are associated with the individual fixing points are connected detachably to the body (6, 60) or to a structure which is spatially fixed relative to the body (6, 60) whereby the fixing elements (8) can be actuated and held by means of actuators (2, 2', 2''), and
b) a control device (1) controls the actuators (2, 2', 2'') so that the spatial position of the fixing elements (8) can be adjusted through the actuators (2, 2', 2'') both in the plane (E) of the through openings (63) and also perpendicular thereto.

## Revendications

1. Agencement pour relier une plaque de base d'un lève-vitre à la carrosserie d'un véhicule, au moyen duquel la plaque de base (7) est susceptible d'être reliée à la carrosserie (6, 60) en au moins deux emplacements de fixation, comportant des éléments de fixation (8) qui sont immobilisés sur la plaque de base (7) et auxquels sont associées des ouvertures traversantes (63) avec une sur-dimension aux emplacements de fixation, qui sont traversées par les éléments de fixation (8) et dans lesquelles les éléments de fixation (8) sont mobiles dans un plan (E),
**caractérisé par**
- des actionneurs (2, 2', 2") qui sont associés aux emplacements de fixation et reliés de façon amovible à la carrosserie (6, 60) ou à une structure fixée dans l'espace par rapport à la carrosserie (6, 60), les actionneurs (2, 2', 2") étant aménagés pour actionner et retenir respectivement l'un des éléments de fixation (8), et
- un dispositif de commande (1) au moyen duquel les actionneurs (2, 2', 2") peuvent être commandés de telle sorte que la position dans l'espace des éléments de fixation (8) est réglable par les actionneurs (2, 2', 2") aussi bien dans le plan (E) des ouvertures traversantes (63) que perpendiculairement à celui-ci.

2. Agencement selon la revendication 1, **caractérisé en ce que** la plaque de base (7) présente un guidage pour un entraîneur (75) du lève-vitre, qui est prévu pour recevoir une vitre (F).

3. Agencement selon la revendication 2, **caractérisé en ce que** la plaque de base (7) comprend plusieurs guidages pour des entraîneurs (75).

4. Agencement selon la revendication 2 ou 3, **caractérisé en ce que** le guidage est intégré d'un seul tenant dans la plaque de base (7).

5. Agencement selon l'une des revendications précédentes, **caractérisé en ce que** les éléments de fixation (8) sont mobiles dans le plan (E) suivant deux axes (x, z).

6. Agencement selon l'une des revendications précédentes, **caractérisé en ce que** la commande des actionneurs (2, 2', 2") s'effectue en se basant sur la position de la vitre (F), à déplacer au moyen du lève-vitre, par rapport à un cadre de vitre associé (68, 69).

7. Agencement selon la revendication 6, **caractérisé en ce qu'**il est prévu au moins un détecteur (9) qui détecte la position de la vitre (F) par rapport au cadre de vitre (68, 69), en particulier par rapport à un joint de vitre (69a).

8. Agencement selon la revendication 7, **caractérisé en ce que** le détecteur (9) est formé par un interrupteur de fin de course.

9. Agencement selon l'une des revendications précédentes, **caractérisé en ce qu'**au moins un entraînement est associé aux actionneurs (2, 2', 2"), qui est couplé au dispositif de commande (1) et qui provoque l'actionnement des éléments de fixation (8) ainsi que le réglage de leur position dans l'espace en se basant sur des signaux de commande du dispositif de commande (1).

10. Agencement selon la revendication 9, **caractérisé en ce que** l'entraînement comprend un mécanisme d'entraînement (5) comportant une broche de déplacement (51).

11. Agencement selon l'une des revendications 6 à 10, **caractérisé en ce que** les actionneurs (2, 2', 2") sont commandés par le dispositif de commande (1) automatiquement en fonction de la position de la vitre (F).

12. Agencement selon l'une des revendications 6 à 10, **caractérisé en ce qu'**une proposition pour le réglage de la plaque de base (7) au moyen des actionneurs (2, 2', 2") est déterminée par le dispositif de commande (1) en fonction de la position de la vitre (F), et elle est affichée sur un affichage (12) du dispositif de commande (1).

13. Agencement selon l'une des revendications précédentes, **caractérisé en ce que** les éléments de fixation (8) sont actionnables par un mouvement de rotation, et **en ce que** les actionneurs (2, 2', 2") sont réalisés pour générer un mouvement de rotation des moyens de fixation (8).

14. Agencement selon l'une des revendications précédentes, **caractérisé en ce que** les éléments de fixation (8) sont formés par des vis.

15. Agencement selon la revendication 14, **caractérisé en ce que** les vis (8) sont vissées dans un taraudage complémentaire (70) de la plaque de base (7) et sont ainsi immobilisées sur celle-ci, la profondeur de vissage des vis (8) dans le taraudage (70) de la plaque de base (7) étant variable.

16. Agencement selon la revendication 14 ou 15, **caractérisé en ce qu'**un écrou (86) est associé à chaque vis (8).

17. Agencement selon la revendication 16, **caractérisé en ce qu'**aussi bien les vis (8) que les écrous associés (6) sont actionnables au moyen des actionneurs (2, 2', 2").

18. Agencement selon la revendication 17, **caractérisé en ce que** l'actionneur respectif (2, 2', 2") destiné à actionner aussi bien une vis (8) qu'un écrou (86) comprend deux arbres concentriques (20, 25) dont l'un au moins est réalisé sous forme d'arbre creux.

19. Agencement selon la revendication 17 ou 18, **caractérisé en ce qu'**une vis (8) et un écrou (86) sont actionnables simultanément au moyen d'un actionneur (2, 2', 2"), la vis (8) étant mobile conjointement avec l'écrou (86) suivant la direction d'extension (y) de la vis (8).

20. Agencement selon l'une des revendications 14 à 19, **caractérisé en ce que** les vis (8) s'étendent perpendiculairement au plan (E).

21. Agencement selon l'une des revendications précédentes, **caractérisé en ce que** la plaque de base (7) et la carrosserie (6) sont reliées l'une à l'autre à trois emplacements de fixation.

22. Agencement selon l'une des revendications précédentes, **caractérisé en ce que** les moyens d'actionnement (20, 25) d'au moins un actionneur (2, 2', 2") prévus pour actionner les éléments de fixation (8) sont mobiles dans le plan (E).

23. Agencement selon la revendication 22, **caractérisé en ce que** les moyens d'actionnement (20, 25) sont montés mobiles en translation dans le plan (E).

24. Agencement selon la revendication 22, **caractérisé en ce que** les moyens d'actionnement (20, 25) sont montés avec articulation au moyen d'une articulation à rotule (58, 58', 59).

25. Agencement selon l'une des revendications 22 à 24, **caractérisé en ce que** les moyens d'actionnement (20, 25) d'un actionneur (2) sont couplés mécaniquement aux moyens d'actionnement (20, 25) d'au moins un autre actionneur (2').

26. Agencement selon l'une des revendications 22 à 24, **caractérisé en ce que** les moyens d'actionnement (20, 25) des actionneurs (2, 2', 2") sont susceptibles d'être commandés chacun indépendamment des autres.

27. Agencement selon l'une des revendications précédentes, **caractérisé en ce que** les actionneurs (2, 2', 2") sont agencés sur un support commun (35).

28. Agencement selon la revendication 27, **caractérisé en ce que** le support (35) est relié de façon stationnaire à la carrosserie (6, 60).

29. Agencement selon la revendication 27, **caractérisé en ce que** le support (35) est monté de façon mobile dans le plan (E) sur la carrosserie (6, 60) et il est mobile en translation dans le plan (E) au moyen du dispositif de commande (1).

30. Agencement selon l'une des revendications précédentes, **caractérisé en ce que** la plaque de base (7) est précontrainte élastiquement en direction de la carrosserie (60).

31. Agencement selon l'une des revendications précédentes, **caractérisé en ce que** les actionneurs (2, 2', 2") sont reliés à la carrosserie (6, 60) au moyen d'éléments d'encliquetage respectifs (4).

32. Procédé pour relier une plaque de base d'un lève-vitre à une carrosserie de véhicule, dans lequel on relie la plaque de base (7) à la carrosserie (6) à au moins deux emplacements de fixation en utilisant des éléments de fixation (8) qui sont immobilisés sur la plaque de base (7) et auxquels sont associées des ouvertures traversantes respectives (63) avec une sur-dimension aux emplacements de fixation, qui sont traversées par les éléments de fixation (8) et dans lesquelles les éléments de fixation (8) sont mobiles dans un plan (E), **caractérisé en ce que**
a) des actionneurs (2, 2', 2") qui sont associés aux emplacements de fixation individuels sont reliés de façon amovible à la carrosserie (6, 60) ou à une structure fixée dans l'espace par rapport à la carrosserie (6, 60), les éléments de fixation (8) pouvant être actionnés et retenus au moyen des actionneurs (2, 2', 2"), et
b) un dispositif de commande (1) commande les actionneurs (2, 2', 2") de telle sorte que la position dans l'espace des éléments de fixation (8) est réglable par les actionneurs (2, 2', 2") aussi bien dans le plan (E) des ouvertures traversantes (63) que perpendiculairement à celui-ci.
